# EUROPEAN PATENT SPECIFICATION

(11) **EP 4 047 465 B1**
(45) Date of publication and mention of the grant of the patent: **29.10.2025**
(21) Application number: 21305217.8
(22) Date of filing: 23.02.2021
(51) Int. Cl.: G06F 3/04883, G06F 3/04842, G06F 3/04845, G06F 40/166, G06F 40/171, G06V 30/142, G06V 30/32, G06V 40/20

(54) **MODIFYING DIGITAL CONTENT**
MODIFIZIERUNG VON DIGITALEM INHALT
MODIFICATION D'UN CONTENU NUMÉRIQUE

(43) Date of publication of application: 24.08.2022
(73) Proprietor: MyScript, 44339 Nantes Cedex 3 (FR)
(72) Inventor: PENIN, Thomas, 44339 Nantes Cedex 3 (FR); BEDNAROWICZ, Romain, 44339 Nantes Cedex 3 (FR)
(74) Representative: RVDB Nantes

(56) References cited:
- JP-A- 2013 012 134
- KR-A- 20150 041 708
- US-A1- 2007 176 904
- US-A1- 2020 005 500
- US-A1- 2020 356 250

## Description

### Technical field

The present disclosure relates to digital content modification and more specifically to modification of handwritten or typeset input using different modification modes.

### Background

Computing devices continue to become more ubiquitous to daily life. They take the form of computer desktops, laptop computers, tablet computers, hybrid computers (2-in-1s), e-book readers, mobile phones, smartphones, wearable computers (including smartwatches, smart glasses/headsets), global positioning system (GPS) units, enterprise digital assistants (EDAs), personal digital assistants (PDAs), game consoles, and the like. Further, computing devices are being incorporated into vehicles and equipment, such as cars, trucks, farm equipment, manufacturing equipment, building environment control (e.g., lighting, HVAC), and home and commercial appliances.

Computing devices generally comprise at least one processing element, such as a central processing unit (CPU), some form of memory, and input and output devices. The variety of computing devices and their subsequent uses necessitate a variety of interfaces and input devices. One such input device is a touch sensitive surface such as a touch screen or touch pad wherein user input is received through contact between the user's finger or an instrument such as a pen or stylus and the touch sensitive surface. Another input device is an input surface that senses gestures made by a user above the input surface. A further input device is a position detection system which detects the relative position of either touch or non-touch interactions with a non- touch physical or virtual surface. Any of these methods of input can be used generally for drawing or inputting text. The user's handwriting is interpreted using a handwriting recognition system or method.

There are many applications of handwriting recognition in portable computing devices, such as smartphones, phablets and tablets, such as is in note taking, document annotation, mathematical equation input and calculation, music symbol input, sketching and drawing, etc. Handwriting may also be input to non-portable computing devices, particularly with the increasing availability of touchscreen monitors for desktop computers and interactive whiteboards. These types of input are usually performed by the user launching a handwriting input application on the computing device which accepts and interprets, either locally in the device or remotely via a communications link of the device, handwritten input on the touch sensitive surface and displays or otherwise renders this input as so-called 'digital ink'.

Conventionally such handwriting input applications are limited in their capabilities to provide a full document creation experience to users from the text and non-text (e.g., drawings, equations), since the focus of these applications has primarily been recognition accuracy rather than document creation.

Computing devices can recognize text or non-text handwritten input. In the case of recognizing text input, available applications provide recognition of handwriting by handling standard character encodings, for example the Unicode encoding standard. Such character encodings maintain a standard character repertoire and allow handling of text expressed in most of the world's writing systems.

Each recognized input may be converted to be displayed as output text or non-text with digital equivalents of the handwritten content. Digital equivalents of handwritten characters are digital glyphs of letters or other symbols, known as typeset characters. In the case of recognized non-text input, digital equivalents of elements of drawings are the closest digital shapes or primitives (parts of shapes).

The digital equivalents are retrieved and ordered according to the digital ink for visual display or rendering as fontified, typeset ink or typesetted version. The typeset version of the converted characters may be provided in the form of one or more fonts.

If the user desires any further interaction with the output text, such as editing the content, manipulating the layout of content, converting or adding the notes or other annotations into a document, or completing a text or an accentuated letter, the recognized handwriting content generally needs to be imported or otherwise integrated into a separate document processing application. This may be done automatically though the typesetting of the recognized handwriting into suitable typeset ink of suitable format or manually through redundant typing input of the handwriting, for example. The latter manual process is inherently counterproductive and is particularly performed when the perceived accuracy of the handwriting recognition is low, or the ability of the application to preserve the layout of the original handwriting is unreliable. The former automatic process itself does not present a great problem, however as the original layout of the handwriting and the actual input handwriting itself, the digital ink, is typically discarded in the import process, the user must refer back to the original handwriting in order to ascertain the original intent. For example, the user may have emphasized certain words or passages either by annotation or decoration, such as underlying or highlighting the digital content including digital ink.

Some available digital handwriting applications provide the ability to edit the digital ink. However, such applications are conventionally limited in their capabilities to handle editing functions and typically constrain users to adopt behaviours or accept compromises which do not reflect the user's original intent. As a result, conventional applications usually force users to navigate through menus to select and edit ink elements.

The Applicant has found that when using handwriting applications users generally are unable or do not desire to learn specific gestures that are not natural or intuitive, or to make editing selections through menus and the like. Further, the requirement for particular learned methods to provide digital ink editing limits the usability of such applications, and digital handwriting more generally, as all users must learn the necessary behaviors for digital ink interaction. Accordingly, it is generally difficult for users to edit digital content in an ergonomic and efficient manner so that quick and accurate editing can be performed. Existing methods usually describe interactions and modifications of handwritten input handled as digital ink or typeset input handled as digital objects, such objects being either the result of a recognition process or inputted directly using existing encoding standards. These methods have been optimized for each specific input type and allow users to interact and modify different input types according to different procedures. Typically, ink may be modified at pixel level, allowing precise modification that can be done by using a pen wherein any pixel of the display that contains digital content is modified if the pen passes over that pixel. Whereas typeset input may usually be modified at object level by selecting a defined object displayed following direct keyboard input or object insertion mode. Modification of mixed input types on a same display may require switching methods and adding interaction steps, it may also result in different modification aspects or rendering when performed on different input types of a same display. Additionally, sharp modification of digital objects may be required at precise level such as pixel level, whereas modification of entire objects may be required in the flow of handwriting input.

Therefore, there is a need for new device and methods to handle modification of mixed input type digital content in a more efficient and productive way by reducing time and enhancing consistency of modifying digital content.

Additionally, handwriting applications, such as note taking applications may handle many kinds of content, such as text and non-text: drawings, diagrams, mathematical or chemical equations and music notation which may be inputted as handwritten input or typeset input and therefore displayed as mixed input type such as digital ink and typeset ink. Indeed, when only part of the handwriting input has been recognized and displayed as typeset ink or when the application allows the user to input handwriting input and typeset input on the same page or within the same running application, different kinds of content are displayed and mixed input types coexist. In this context, when the user wishes to modify, edit or format mixed input type content, the use of modification tools such as an eraser or a highlighter is expected to be consistent in its behavior and its resulting content. Conventional computing devices, however, are not satisfactory in this respect and do not allow fast and efficient editing when various kinds of content are involved.

Document US 2020/356250 discloses a mechanism for manipulating a user interface of a display at an electronic device, where an erase object mode or a pixel erase mode can be used.

Document US 2007//176904 discloses pen-based computer systems where an electronic pen may with an eraser end may be used for erasing content. Two types erasing systems can be used: a pixel eraser system and a stroke eraser system.

Document KR 2015 0041708 A discloses a mobile terminal including a display that can form and delete an image based on a touch input.

Document JP 2013 012134 A discloses display device with a handwriting input function that detects a change in a position touched by a display unit as a handwriting trajectory and displays a line at a corresponding location.

### Summary of the invention

The present invention is defined in the appended set of claims.

The examples of the present invention that are described herein below provide computing devices, methods and corresponding computer programs for processing digital content in a document, and in particular for performing a modification on digital content of a document.

According to a particular aspect, the invention provides a computing device for performing a modification on digital content of a document, comprising: a display interface configured to display the digital content as a handwritten input or a typeset input; an identification module configured to interpret the digital content as one or more objects; a mode type selection module configured to select a mode type, wherein said mode type is pixel-mode or object-mode; an input surface configured to detect a modification gesture wherein one or more boundaries of the modification gesture are intersecting with at least part of the digital content; a selection module configured to select, at least partially, the digital content according to the selected mode type, the selection module comprising: an object selection module, configured to select one or more objects of the digital content when the selected mode type is object-mode, wherein the selected one or more object are intersecting, at least partially, with the one or more boundaries of the detected modification gesture; and a pixel selection module configured to select one or more pixels of the digital content when the selected mode type is pixel-mode, wherein the selected one or more pixels are contained within the one or more boundaries of the detected modification gesture; and a modification module configured to modify at least the selected digital content, the modification module comprising: an object modification module configured to modify at least the selected one or more objects of the digital content, when the selected mode type MT is object-mode; and a pixel modification module configured to modify at least the selected one or more pixels of the digital content, when the selected mode type MT is pixel-mode.

According to a particular embodiment, the computing device comprises a modification type selection module configured to select a modification type, wherein the modification module is configured to modify at least the selected digital content according to the selected modification type.

According to a particular embodiment, the one or more objects of the digital ink comprise characters, words, paragraphs or shapes.

According to a particular embodiment, the digital content is interpreted as a plurality of segments and wherein the pixel selection module is configured to select one or more segments of the digital content intersecting within the one or more boundaries of the detected modification gesture, said pixel modification module being configured to modify at least the selected one or more segments.

According to a particular embodiment, the object modification module is configured to format the selected one or more objects and the pixel modification module is configured to change the rendering the selected one or more pixels when the selected mode type is object-mode and pixel-mode, respectively.

According to a particular embodiment, the object modification module is configured to erase the selected one or more objects and the pixel modification module is configured to erase the selected one or more pixels, when the selected mode type is object-mode and pixel-mode, respectively.

According to a particular embodiment, the mode type selection module is configured to select the mode type through interaction with a tool comprising at least one of a keyboard, UI buttons or a menu.

According to a particular embodiment, the mode type selection module is configured to detect the selected mode type according to a selecting gesture detected on the input surface.

According to a particular embodiment, the mode type selection module is configured to detect the selected mode type by assessing at least one characteristic of the selecting gesture.

According to a particular embodiment, said at least one characteristic of the selecting gesture comprises a first characteristic defined as a speed of the selecting gesture.

According to a particular embodiment, said at least one characteristic of the selecting gesture comprises a second characteristic defined as a direction of the selecting gesture.

According to a particular embodiment, the selecting gesture is the modification gesture.

In a particular embodiment, the invention may be implemented using software and/or hardware components. In this context, the term "module" can refer in this disclosure to a software component, as well as a hardware component or a plurality of software and/or hardware components.

The present invention also relates to a corresponding method, implemented by a computing device as defined above, for performing a modification on digital content. More particularly, the present invention provides a method for performing a modification on digital content of a document in a pixel-mode or an object-mode, comprising: displaying the digital content as a handwritten input or a typeset input; interpreting the digital content as one or more objects; selecting a mode type, wherein said mode type is pixel-mode or object-mode; detecting one or more boundaries of a modification gesture intersecting at least part of the digital content; selecting, at least partially, the digital content , said selecting comprising: selecting one or more objects of the digital content when the selected mode type MT is object-mode, wherein the selected one or more objects are intersecting, at least partially, with the one or more boundaries of the modification gesture; selecting one or more pixels of the digital content when the selected mode type MT is pixel-mode, wherein the selected one or more pixels are contained within the one or more boundaries of the modification gesture; modifying at least the selected digital content, said modifying comprising: modifying at least the selected one or more objects of the digital content when the mode type is object-mode. modifying at least the selected one or more pixels of the digital content when the mode type is pixel-mode.

In a particular embodiment, the displayed digital content comprises handwritten input and typeset input; the identified handwritten input and typeset input are interpreted as at least one first object and at least one second object, respectively; at least one boundary of the detected modification gesture is intersecting at least part of the first object and at least part of the second object; the selected digital content comprises: at least the first object and at least the second object when the selected mode type is object-mode; and at least one pixel of the handwritten input and at least one pixel of the typeset input when the selected mode type is pixel mode, wherein the selected at least one pixel is contained within the one or more boundaries of the modification gesture.

In a particular embodiment, the at least first object and the at least second object are formatted or edited, including highlighted or erased, by the object modification module; the at least one pixel of the handwritten input and at least one pixel of the typeset input are modified, including colored or set to a background color, by the pixel modification module.

The various embodiments defined above in connection with the computing device of the present invention apply in an analogous manner to the method, the computer program and the non-transitory computer readable medium of the present disclosure.

For each step of the method of the present invention as defined in the present disclosure, the computing device may comprise a corresponding module configured to perform said step, and vice versa.

According to another aspect, the present inventions relates to a non-transitory computer readable medium having recorded thereon a computer readable program code (or computer program) including instructions for executing the steps of the method of the invention as defined in the present document.

The computer program of the invention can be expressed in any programming language, and can be in the form of source code, object code, or any intermediary code between source code and object code, such that in a partially-compiled form, for instance, or in any other appropriate form.

The invention also provides a computer program as mentioned above.

The non-transitory computer readable medium previously mentioned can be any entity or device capable of storing the computer program. For example, the recording medium can comprise a storing means, such as a ROM memory (a CD-ROM or a ROM implemented in a microelectronic circuit), or a magnetic storing means such as a floppy disk or a hard disk for instance.

The non-transitory computer readable medium of the invention can correspond to a transmittable medium, such as an electrical or an optical signal, which can be conveyed via an electric or an optic cable, or by radio or any other appropriate means. The computer program according to the disclosure can in particular be downloaded from the Internet or a network of the like.

Alternatively, the non-transitory computer readable medium can correspond to an integrated circuit in which a computer program is loaded, the circuit being adapted to execute or to be used in the execution of the methods of the invention.

In a particular embodiment, the invention relates to a non-transitory computer readable medium having a computer readable program code embodied therein, said computer readable program code being adapted to be executed to implement a method on a computing device as defined in the present document, the computing device comprising a processor for executing the steps of said method.

### Brief description of the drawings

The present system and method will be more fully understood from the following detailed description of the examples thereof, taken together with the drawings. In the drawings like reference numerals depict like elements. In the drawings:
FIG. 1 shows a block diagram of a computing device in accordance with an embodiment of the present invention;
FIG. 2 shows a block diagram of a system for handwriting recognition in accordance with an embodiment of the present invention;
FIG. 3 shows a block diagram illustrating detail of the handwriting recognition system of FIG. 2 in accordance with an embodiment of the present invention;
FIG. 4.A shows a schematic view of an example visual rendering of an ink input area on a portion of an input surface of a computing device of the present invention;

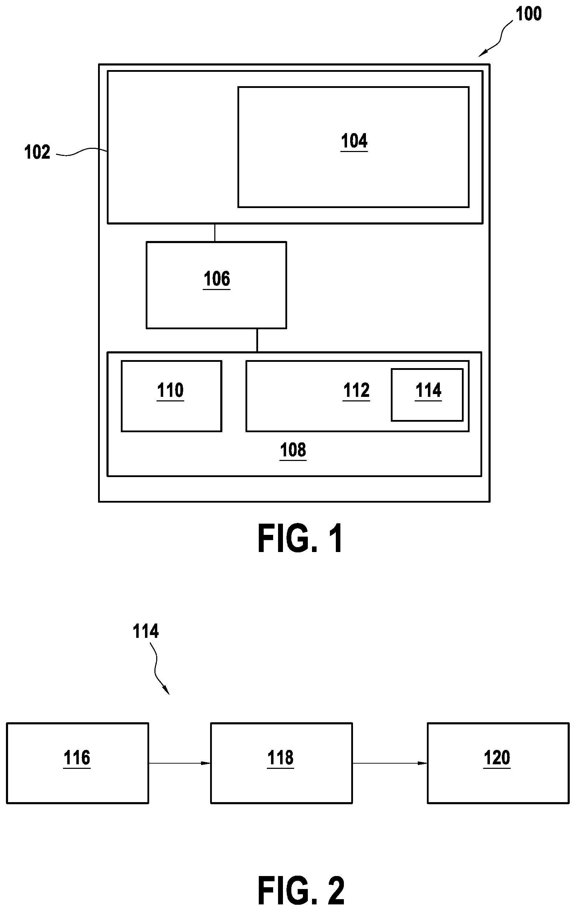

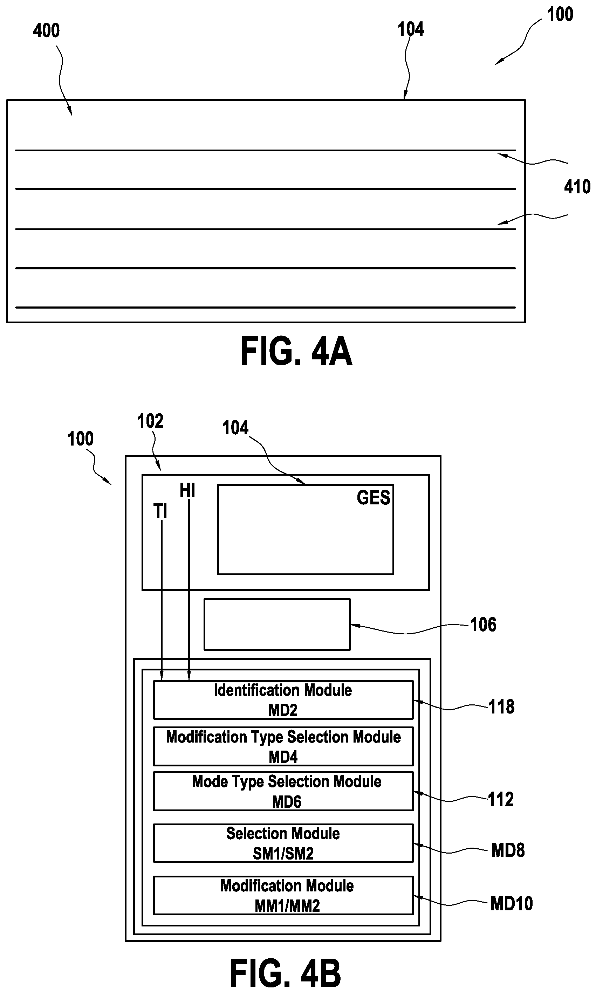

FIG. 4.B show is a block diagram representing schematically modules implemented by the computing device of FIG. 1, according to a particular embodiment of the invention; and

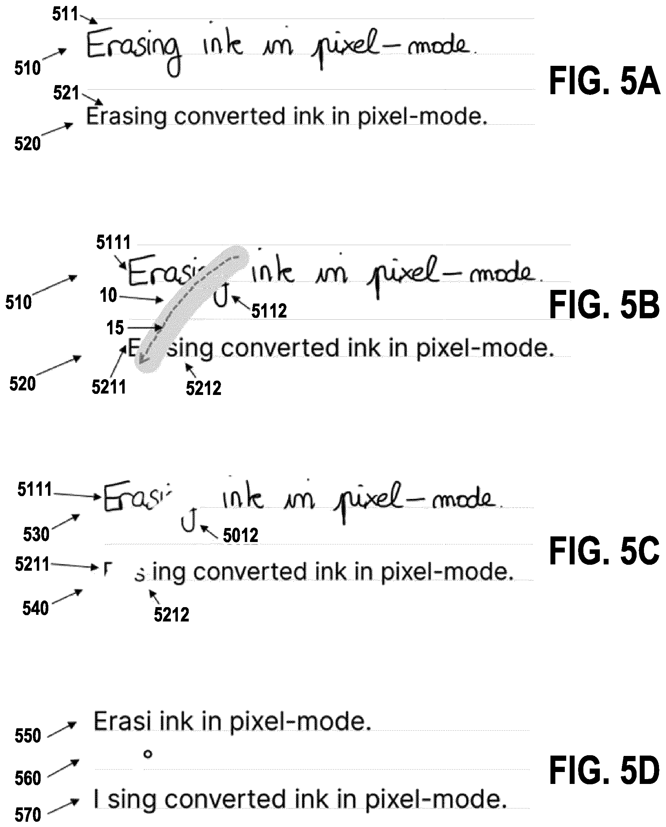

FIG. 5.A shows an example of digital content input to an input area and rendered as digital ink and typeset ink on a computing device of the present invention;
FIG. 5.B shows the digital content of FIG. 5.A and a modification gesture input, according to a particular embodiment of the present invention;
FIG. 5.C shows the result of the erasing modification operated on the digital content of FIG. 5.A in pixel-mode, according to a particular embodiment of the present invention;
FIG. 5.D shows the content of FIG. 5.C resulting from the typesetting of the erased content of FIG. 5.C, according to a particular embodiment of the present invention;

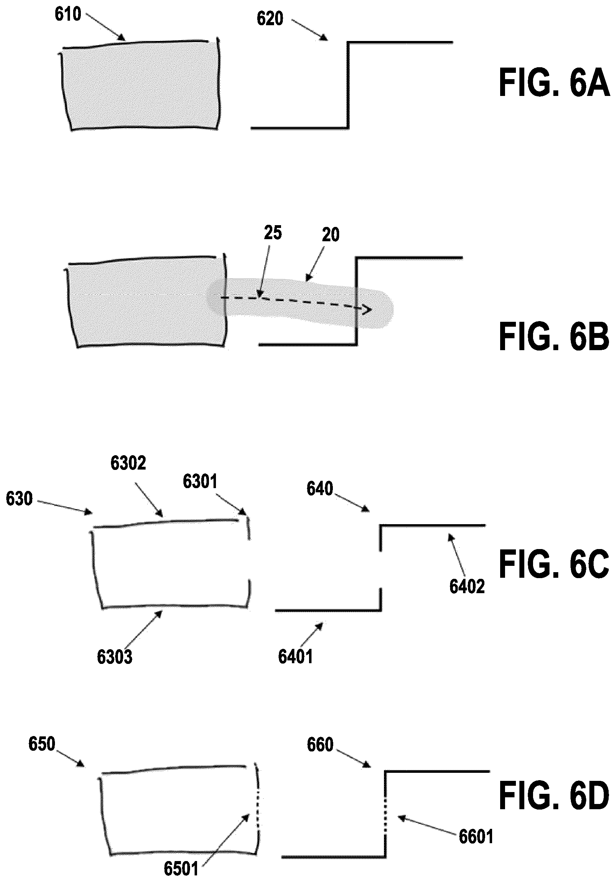

FIG. 6.A shows an example of digital content input to an input area and rendered as digital ink and typeset ink on a computing device of the present invention;
FIG. 6.B shows the digital content of FIG. 6.A and a modification gesture input, according to a particular embodiment of the present invention;
FIG. 6.C shows the result of an erasing modification operated on the digital content of FIG. 6.A in pixel-mode, according to a particular embodiment of the present invention;
FIG. 6.D shows the result of a formatting modification operated on the digital content of FIG. 6.A in pixel-mode, according to a particular embodiment of the present invention;

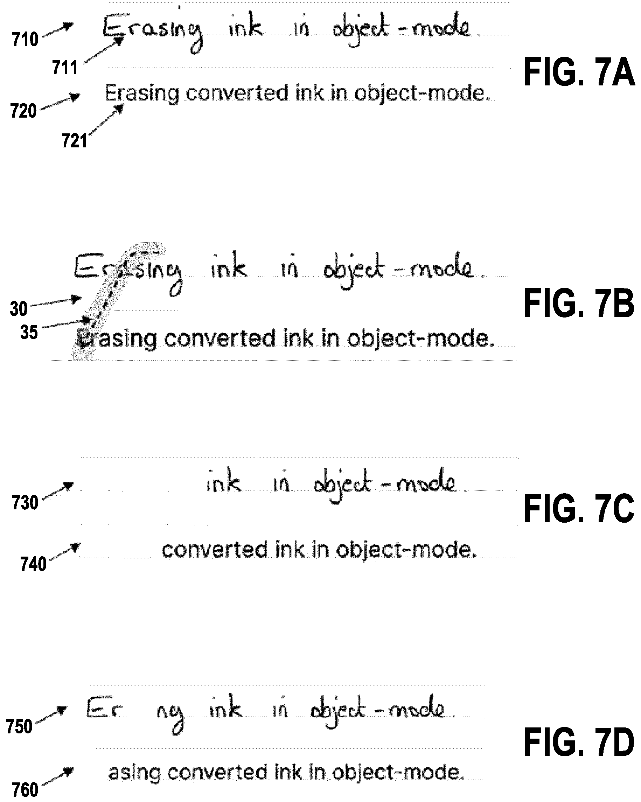

FIG. 7.A shows an example of digital content input to an input area and rendered as digital ink and typeset ink on a computing device of the present invention;
FIG. 7.B shows the digital content of FIG. 7.A and a modification gesture input, according to a particular embodiment of the present invention;
FIG. 7.C shows the result of an erasing modification operated on the digital content of FIG. 7.A in object-mode such as words, according to a particular embodiment of the present invention;
FIG. 7.D shows the result of an erasing modification operated on the digital content of FIG. 7.A in object-mode such as characters, according to a particular embodiment of the present invention;

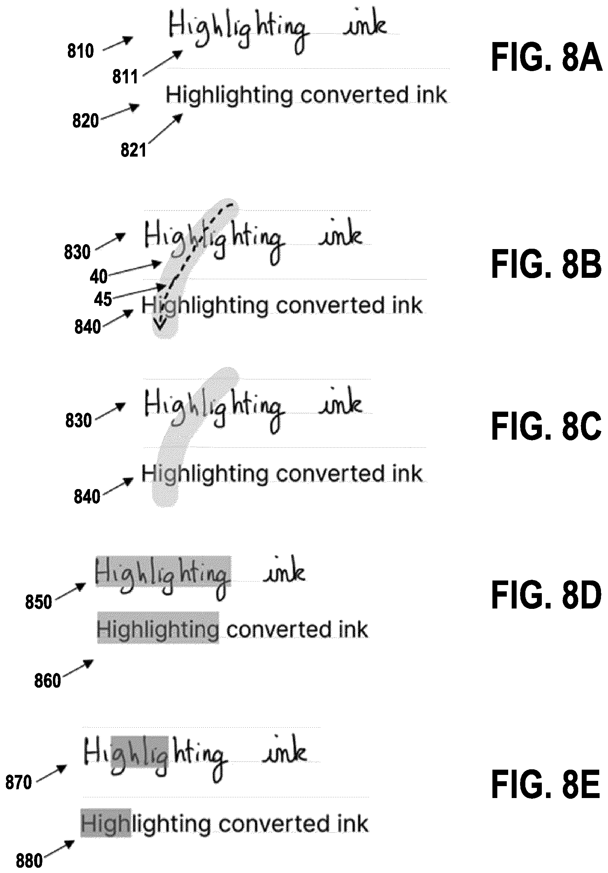

FIG. 8.A shows an example of digital content input to an input area and rendered as digital ink and typeset ink on a computing device of the present invention;
FIG. 8.B shows the digital content of FIG. 8.A and a modification gesture input, according to a particular embodiment of the present invention;
FIG. 8.C shows the result of a marking modification operated on the digital content of FIG. 8.A in pixel-mode, according to a particular embodiment of the present invention;
FIG. 8.D shows the result of a highlighting modification operated on the digital content of FIG. 8.A in object-mode such as word, according to a particular embodiment of the present invention;
FIG. 8.E shows the result of a highlighting modification operated on the digital content of FIG. 8.A in object-mode such as character, according to a particular embodiment of the present invention;

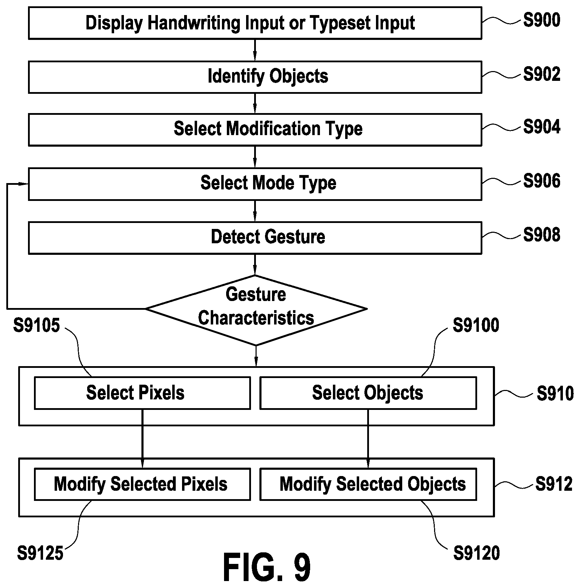

FIG.9 shows a flow diagram of an example of the present method for completing a character of a text of a digital document on a computing device.

The components in the figures are not necessarily to scale, emphasis instead being placed upon illustrating the principles of the present invention.

For simplicity and clarity of illustration, the same reference signs will be used throughout the figures to refer to the same or analogous parts, unless indicated otherwise.

### Description of particular embodiments of the invention

In the following detailed description, numerous specific details are set forth by way of examples in order to provide a thorough understanding of the relevant teachings. However, it should be apparent to those skilled in the art that the present teachings may be practiced without such details. In other instances, well known method, procedures, and/or components are described at a relatively high-level, without detail, in order to avoid unnecessarily obscuring aspects of the present teachings.

The following description of the exemplary embodiments refers to the accompanying drawings. The following detailed description does not limit the invention. Instead, the scope of the invention is defined by the appended claims. In various embodiments as illustrated in the figures, a computing device, a corresponding method and a corresponding computer program are discussed.

The terms "hand-drawing" and "handwriting" are used interchangeably herein to define the creating of digital ink (handwriting input) by users through use of their hands (or fingers) or an input device (hand-held stylus or digital pen, mouse...) on or with an input surface. The term "hand" or the like is used herein to provide concise description of the input techniques, however the use of other parts of a user's body for similar input is included in this definition, such as foot, mouth and eye.

The term "text" in the present disclosure is understood as encompassing all characters and the like (e.g. alphanumeric characters), and strings thereof, in any written language and, more generally, any symbols used in written text. Text thus includes for instance base characters and accents from any script, such as Latin scripts, Cyrillic scripts, Chinese scripts, and so on. Text may comprise one or a plurality of such symbols, and may be arranged in various manner such as in text lines, paragraph of multiple text lines, etc.

The term "non-text" in the present description is understood as encompassing graphic or geometric formations in linear or non-linear configurations, including containers, drawings, common shapes (arrows, blocks...) or the like. In diagrams for instance, text content may be contained in a shape (a rectangle, ellipse, oval shape ...) called containers.

Furthermore, the examples described below and shown in the drawings are in a left-to-right written language context, and therefore any reference to positions can be adapted for written languages having different directional formats.

FIG. 1 shows a block diagram of a computing device 100 according to a particular embodiment of the present invention. The computing device 100 may be a computer desktop, laptop computer, tablet computer, hybrid computers (2-in-1s), e-book reader, mobile phone, smartphone, wearable computer, digital watch, interactive whiteboard, global positioning system (GPS) unit, enterprise digital assistant (EDA), personal digital assistant (PDA), game console, or the like. The computing device 100 includes components of at least one processing element (a processor or the like), some form of memory and input and/or output (I/O) devices. The components communicate with each other through inputs and outputs, such as connectors, lines, buses, cables, buffers, electromagnetic links, networks, modems, transducers, IR ports, antennas, or others known to those of ordinary skill in the art.

The computing device 100 comprises at least one display 102 for displaying data such as images, text, and video. The display (or screen) 102 may use LCD, plasma, LED, iOLED, CRT, or any other appropriate technology that is or is not touch sensitive as known to those of ordinary skill in the art.

The computing device 100 also comprises an input surface 104 for handwriting (or hand-drawing) text and non-text content. The input surface 104 is suitable to detect strokes of digital ink entered by a user on (or using) the input surface 104. At least some of the display 102 may be co-located with the input surface 104. The input surface 104 may employ any appropriate technology such as resistive, surface acoustic wave, capacitive, infrared grid, infrared acrylic projection, optical imaging, dispersive signal technology, acoustic pulse recognition, or any other appropriate technology as known to those of ordinary skill in the art to receive user input in the form of a touch- or proximity-sensitive surface. The input surface 104 may be a touch sensitive surface (or a touch sensitive screen) or it may be a non-touch sensitive surface (a non-touch sensitive screen) monitored by a position detection system. The input surface 104 may be bounded by a permanent or video-generated border that clearly identifies its boundaries. Instead of, or additional to, an on-board display, the computing device 100 may have a projected display capability.

The computing device 100 may include one or more additional I/O devices (or peripherals) that are communicatively coupled via a-local interface. The additional I/O devices may include input devices such as a keyboard, mouse, scanner, microphone, touchpads, bar code readers, laser readers, radio-frequency device readers, or any other appropriate technology known to those of ordinary skill in the art. Further, the I/O devices may include output devices such as a printer, bar code printers, or any other appropriate technology known to those of ordinary skill in the art. Furthermore, the I/O devices may include communications devices that communicate both inputs and outputs such as a modulator/demodulator (modem; for accessing another device, system, or network), a radio frequency (RF) or other transceiver, a telephonic interface, a bridge, a router, or any other appropriate technology known to those of ordinary skill in the art. The local interface may have additional elements to enable communications, such as controllers, buffers (caches), drivers, repeaters, and receivers, which are omitted for simplicity but known to those of skill in the art. Further, the local interface may include address, control, and/or data connections to enable appropriate communications among the other computer components.

As shown in Fig. 1, the computing device 100 also includes a processor 106 and a memory 108.

The processor 106 is a hardware device for executing software, particularly software stored in the memory 108. The processor 106 can be any custom made or commercially available general purpose processor, a central processing unit (CPU), commercially available microprocessors including a semiconductor based microprocessor (in the form of a microchip or chipset), microcontroller, digital signal processor (DSP), application specific integrated circuit (ASIC), field programmable gate array (FPGA) or other programmable logic device, discrete gate or transistor logic, discrete hardware components, state machine, or any combination thereof designed for executing software instructions known to those of ordinary skill in the art.

The memory 108 is (or comprises) a non-transitory (or non-volatile) computer readable medium (or recording medium). The memory 108 can include any one or a combination of volatile memory elements (e.g., random access memory (RAM, such as DRAM, SRAM, or SDRAM)) and nonvolatile memory elements (e.g., ROM, EPROM, flash PROM, EEPROM, hard drive, magnetic or optical tape, memory registers, CD-ROM, WORM, DVD, redundant array of inexpensive disks (RAID), another direct access storage device (DASD), or any other magnetic, resistive or phase-change nonvolatile memory). Moreover, the memory 108 may incorporate electronic, magnetic, optical, and/or other types of storage media. The memory 108 can have a distributed architecture where various components are situated remote from one another but can also be accessed by the processor 106. Further, the memory 108 may be remote from the device, such as at a server or cloud-based system, which is remotely accessible by the computing device 100. The memory 108 is coupled to the processor 106, so the processor 106 can read information from and write information to the memory 108. In the alternative, the memory 108 may be integral to the processor 106. In another example, the processor 106 and the memory 108 may both reside in a single ASIC or other integrated circuit.

The software in the memory 108 includes an operating system 110 and an ink management system (or ink manager) 112. The operating system 110 is configured to control the execution of the ink management system 112. The ink management system 112 constitutes (or comprises) a computer program (or computer-readable program code) according to a particular embodiment of the invention, this computer program comprising instructions to implement a method according to a particular embodiment of the invention.

The ink management system 112 optionally further includes a handwriting recognition (HWR) system 114 which may each include one or more separate computer programs. Each of these has an ordered listing of executable instructions for implementing logical functions. The operating system 110 controls the execution of the ink manager 112 (and the HWR system 114). The operating system 110 may be any proprietary operating system or a commercially or freely available operating system, such as WEBOS, WINDOWS^{®}, MAC and IPHONE OS^{®}, LINUX, and ANDROID. It is understood that other operating systems may also be utilized. Alternatively, the ink management system 112 of the present system and method may be provided without use of an operating system.

The ink manager 112 includes one or more processing elements (also called modules or processing modules) related to detection, management and treatment of user input (discussed in detail later). The software may also include one or more other applications related to handwriting recognition, different functions, or both. Some examples of other applications include a text editor, telephone dialer, contacts directory, instant messaging facility, computer-aided design (CAD) program, email program, word processing program, web browser, and camera. The ink manager 112, and the other applications, include program(s) provided with the computing device 100 upon manufacture and may further include programs uploaded or downloaded into the computing device 100 after manufacture.

The HWR system 114, with support and compliance capabilities, may be a source program, executable program (object code), script, application, or any other entity having a set of instructions to be performed. When a source program, the program needs to be translated via a compiler, assembler, interpreter, or the like, which may or may not be included within the memory, so as to operate properly in connection with the operating system. Furthermore, the handwriting recognition system with support and compliance capabilities can be written as (a) an object oriented programming language, which has classes of data and methods; (b) a procedure programming language, which has routines, subroutines, and/or functions, for example but not limited to C, C++, Pascal, Basic, Fortran, Cobol, Perl, Java, Objective C, Swift, Python, C#, Ruby, Rust, Go, Julia, Kotlin, Javascript, R and Ada; or (c) functional programing languages for example but no limited to Hope, Rex, Common Lisp, Scheme, Clojure, Racket, Erlang, OCaml, Haskell, Prolog, and F#.

Alternatively, the HWR system 114 may be a method or system for communication with a handwriting recognition system remote from the device, such as server or cloud-based system, but is remotely accessible by the computing device 100 through communications links using the afore-mentioned communications I/O devices of the computing device 100. In FIG. 1, the HWR system 114 is shown as being incorporated in the ink manager 112, however it is possible the HWR system 114 is separate from and connected to the ink manager 112 either within the computing device 100 or remotely. Further still, the ink manager 112 and/or the HWR system 114 may be integrated within the operating system 110.

Strokes entered on or via the input surface 104 are processed by the processor 106 as digital ink. Users may enter a stroke with a finger or some instrument such as a pen or stylus suitable for use with the input surface. The user may also enter a stroke by making a gesture above the input surface 104 if technology that senses or images motion in the vicinity of 'the input surface 104 is being used, or with a peripheral device of the computing device 100, such as a mouse or joystick, or with a projected interface, e.g., image processing of a passive plane surface to determine the stroke and gesture signals.

In the present document, a stroke is characterized by at least the stroke initiation location, the stroke termination location, and the path connecting the stroke initiation and termination locations. Further information such as timing, pressure, angle at a number of sample points along the path may also be captured to provide deeper detail of the strokes. Because different users may naturally write the same object, e.g., a letter, a shape, a symbol, with slight variations, the HWR system 114 accommodates a variety of ways in which each object may be entered whilst being recognized as the correct or intended object.

A stroke applied by the user may comprise a plurality of ink points and a plurality of timestamps associated respectively with the plurality of ink points. The plurality of ink points may be localized in a rectangular coordinate space (defined based on a screen of the touch-based user interface) with each ink point being associated with (X,Y) coordinates in the rectangular coordinate space.

The position of each ink point may be set by segmenting the strokes in a regular manner, e.g., each stroke segment has the same length (such as number of pixels with respect to the digital ink representation), in accordance with the stroke characteristics, or in accordance with the device sampling and any possible pre-sampling applied by the system.

In the present invention, the term "pixel" may encompass any pixels forming digital content as an image, by using, for example, well-known image processing techniques, or any ink points arising either from the segmentation of the strokes such as number of pixels with respect to the digital ink representation in accordance with the stroke characteristics, or in accordance with the device sampling and any possible pre-sampling applied by the system.

FIG. 2 is a schematic pictorial of an example of the HWR system 114, in either its local (i.e., loaded on the device 100) or remote (i.e., remotely accessible by the device 100) forms. The HWR system 114 includes stages (and corresponding modules) such as preprocessing 116, recognition 118 and output 120. The preprocessing stage 116 processes the digital ink to achieve greater accuracy and reducing processing time during the recognition stage 118.

This preprocessing may include normalizing of the path connecting the stroke initiation and termination locations by applying size normalization and/or methods such as β-spline approximation to smooth the input. The preprocessed strokes are then passed to the recognition stage 118 which processes the strokes to recognize the objects formed thereby. The recognized objects are then output 120 to the display 102 as a digital ink or typeset ink versions of the handwritten input.

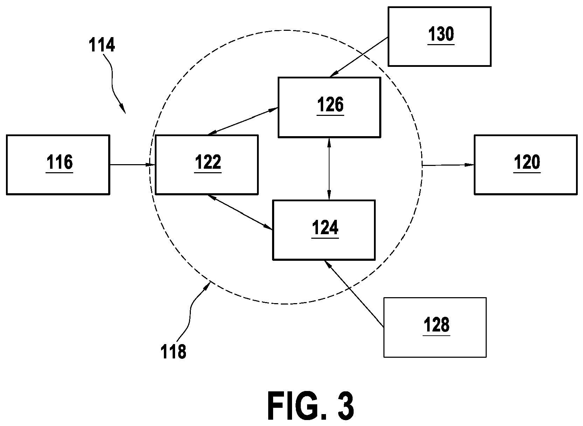

The recognition stage 118 may include different processing elements or experts. FIG. 3 is a schematic pictorial of the example of FIG. 2 showing schematic detail of the recognition stage 118. Three expert systems (or modules), a segmentation expert system (or segmentation module) 122, a recognition expert system (or recognition module) 124, and a language expert system (or language module) 126, are illustrated which collaborate through dynamic programming to generate the output 120. An expert system is a computer system emulating the decision-making ability of a human expert. Expert systems are designed to solve complex problems by reasoning through bodies of knowledge, represented mainly as if-then rules rather than through conventional procedural programming.

Some aspects of these experts are described here below to facilitate understanding of the present invention. However, no further detail is provided to avoid unnecessarily obscuring the present disclosure. Details of implementing handwriting recognition can for instance be found in EP patent application N° 1 836 651 A1.

The segmentation expert 122 defines the different ways to segment the input strokes into individual element hypotheses, e.g., alphanumeric characters and mathematical operators, text characters, individual shapes, or sub expression, in order to form expressions, e.g., words, mathematical equations, or groups of shapes.

For example, the segmentation expert 122 may form the element hypotheses by grouping consecutive strokes of the original input to obtain a segmentation graph where each node corresponds to at least one element hypothesis and where adjacency constraints between elements are handled by the node connections.

Alternatively, the segmentation expert 122 may employ separate experts for different text or non-text input, such as characters, drawings, equations, and music notation.

To this end, the segmentation expert 122 may process the plurality of ink points into a plurality of segments each corresponding to a respective sub-stroke of the stroke represented by the original input. Each sub-stroke comprises a respective subset of the plurality of ink points representing the stroke.

The insight behind sub-stroke segmentation is to obtain a sequential representation that follows the path of the stroke. Each segment corresponds as such to a local description of the stroke. Compared to representing the stroke as a mere sequence of points, sub-stroke segmentation permits to maintain path information (i.e., the relationships between points within each segment) which results in a reduction in computation time.

Different sub-stroke segmentation techniques may be used according to embodiments. In an embodiment, sub-stroke segmentation based on temporal information is used, resulting in the plurality of segments having equal duration. In an embodiment, the same segment duration is used for all strokes. Further, the segment duration may be device independent.

In an embodiment, where the plurality of ink points are resampled according to a temporal frequency, the subsequent segmentation of the plurality of ink points based on temporal information (i.e., into equal duration segments) corresponds to splitting the stroke into a plurality of segments having an equal number of ink points (with same durations but potentially with different lengths).

The recognition expert 124 provides classification of the features extracted by a classifier 128 and outputs a list of element candidates with probabilities or recognition scores for each node of the segmentation graph.

The recognition expert 124 associates a list of character candidates with probabilities or recognition scores for each node of the segmentation graph. These probabilities or recognition scores are based on language information 130. The language information defines all the different characters and symbols of the alphabet underlying to the specified language. This information is language dependent and comprises general differences in alphabets as well as the ability to recognize various individual and regional styles of writing the alphabets. For instance, the way an individual writes a "7" can be quite different depending on whether that individual is from the USA, France, or even Korea. The recognition expert 124 may include two stages. An optional stage of the recognition expert 124, feature extraction, is based on a combination of dynamic and static features. For instance, the dynamic features can be extracted from the trajectory of the input stroke and are based on information such as position, direction, and curvature of the input stroke. Static features can be extracted from a bitmap representation of the input stroke and can be based on projections and histograms.

Then the recognition expert classifies the input or the extracted features. Many types of classifiers exist that could be used to address this recognition task, e.g., Support Vector Machines, Hidden Markov Models, or Neural Networks such as Multilayer Perceptrons, Deep, Convolutional or Recurrent Neural Networks. The choice depends on the complexity, accuracy, and speed desired for the task. The recognition expert 124 outputs a list of character candidates with probabilities or recognition scores for each node of the segmentation graph.

The language expert 126 generates linguistic meaning for the different paths in the segmentation graph using language models (e.g., grammar or semantics). The expert 126 checks the candidates suggested by the other experts according to linguistic information 130. The linguistic information 130 can include a lexicon, regular expressions, etc. and is the storage for all static data used by the language expert 126 to execute a language model. A language model can rely on statistical information on a given language. The linguistic information 130 is computed off-line, with or without adaption according to the results of recognition and user interactions and provided to the linguistic expert 126. The language expert 126 aims at finding the best recognition path. In one example, the language expert 126 does this by exploring a language model such as finite state automaton (FSA) representing the content of linguistic information 130. In addition to the lexicon constraint, the language expert 126 may use a language model with statistical information modeling for how frequent a given sequence of elements appears in the specified language or is used by a specific user to evaluate the linguistic likelihood of the interpretation of a given path of the segmentation graph.

The computing device 100 and corresponding method detect and differentiate the input of the different handwritten objects of text and non-text (e.g. shapes) so that they are processed by the HWR system 114 with suitable recognition techniques, e.g., the strokes of the detected shapes are processed using a shape language model and the strokes of the detected text are processed using a text language model.

The computing device 100 and corresponding method make use of the HWR system 114 in order to recognize handwritten input to the device 100. The ink management system 112 includes application(s) for handling the layout of the recognized user input. Such applications may be provided in an architecture with separate layers for handling different processing. One or more of these layers may be remote to the device 100 accessible via the communications channels mentioned earlier. The layers may include application wrapper(s), platform wrapper(s) and (platform specific) application user interface(s).The ink management system 112 of the computing device 100 allows users to use natural writing to input content and to interact with the content to produce digital documents in sharable format on their portable or non-portable computing devices using natural and intuitive operations, such as gestures. Any person able to write is familiar with using handwriting to create and edit content. Any digital device user is already accustomed to gesturing on screen to write or edit content. Gesturing is a natural and intuitive pattern on touch and hover devices. These and other features of the present system and method are now described in detail.

FIG. 4.A shows a schematic view of an example visual rendering of a digital ink input in a capture area 400 within the display 102 of the computing device 100. The input area 400 is provided as a constraint-free canvas that allows users to create object blocks (blocks of text, drawings, etc.) anywhere without worrying about sizing or alignment. However, as can be seen an alignment structure in the form of a line pattern background 410 can be provided for guidance of user input and the alignment of digital and typeset ink objects. In any case, as users may input handwriting that is not closely aligned to the line pattern, or may desire to ignore the line pattern and write in an unconstrained manner, such as diagonally or haphazardly, the recognition of the handwriting input is performed by the HWR system 114 without regard to the line pattern. An example alignment pattern is described in United States Patent Application No. 14/886,195 titled "System and Method of Digital Note Taking" filed in the name of the present Applicant and Assignee, the entire content of which is incorporated by reference herein.

The input of handwritten content onto the input area 400 is performed through the use of gestures in relation to the input surface 104, e.g., through touch, force and/or proximity depending on the screen technology of the device 100. Gesture detection may be handled differently depending on the ability of the computing device 100 to differentiate a users' finger from a stylus or pen (by which the device defines passive and active styli) or the ability of a stylus to indicate or communicate to the device that it is being used for handwriting or the ability of users to provide such an indication. By default, and in devices which do not differentiate, any single-point touch or hover event within the input area 400 is to be considered as content input or content interaction. The present system and method through the HWR system 114 also provide a mechanism to digitize the handwritten input through the typesetting or fontification of the digital ink into typeset ink. This function is particularly provided to allow the creation of at least near-final documents for communication and sharing, e.g., conversion of a handwritten note which has been edited and formatted in digital ink into a typeset document which could have been produced using keyboard (and associated gesturing devices) alone.

The handwritten input is detected by the ink management system 112 and rendered as digital ink on the display 102 (or other display) as the input is received and is concurrently recognized by the HWR system 114 providing so-called 'on-the-fly' or incremental handwriting recognition. Incremental recognition is generally performed by parsing the (preprocessed) strokes to the recognizer as they are received and the recognizer processing groups of the strokes to output recognition results, even as input continues, where the results may be substantially immediately provided in the form of typesetting of the digital ink or displayed recognition candidates, or merely stored by the ink management system 112 for later use, e.g., by using the memory 108 of the device 100. Re-recognition may occur upon the input of further strokes that relate to earlier input strokes in a spatial manner, such as diacritics. Alternatively, or additionally, handwriting recognition may be performed as a batch process, rather than incrementally. In such an example, display of the digital ink and the typeset ink may occur during input at specified times, e.g., system and/or user specified, or may occur at a time after input on the same or different device, for example.

As shown in FIG. 4.B according to a particular embodiment, when running the ink management system 112 stored in the memory 108 (FIG. 1), the processor 106 may implement software or hardware modules, namely: an identification module MD2 (which in the present example may be the recognition module 118 shown in FIG. 2), a modification type selection module (or a modification type selector) MD4, a mode type selection module (or a mode type selector) MD6, a selection module comprising an object selection module (or an object selector) SM1 and a pixel selection module (or a pixel selector) SM2, and a modification module comprising a object modification module (or an object modificator) MM1 and a pixel modification module (or a pixel modificator) MM2. Other embodiments are possible where the processor 106 does not implement the modification type selection module MD4.

The identification module MD2 is configured to interpret digital ink IT (i.e. handwriting input or/and typeset input) as at least one or more object.

The identification module MD2 may be configured to interpret (or recognize) the handwriting input displayed on the display interface 102 via the recognition module 118 of the HWR system 114, as detailed thereover in FIG. 2. In this example the identification module MD2 is configured to segment the input strokes into a plurality of segments and outputs a list of element candidates with probabilities or objects such as alphanumeric characters, mathematical operator, text characters, individual shapes, or sub-expression in order to form expression such as words, mathematical equations, or groups of shapes.

Additionally, the ink management system may provide metadata information on object type, font, styling, relative position, embedded data or hyperlinks, etc. of the digital content. The handwriting recognition process may provide information with respect to each recognition object, e.g., each recognized character: the computing device references or links the 'raw' or input ink (e.g., the handwritten strokes) to the digital ink (e.g., the displayed ink). By this link, the relationship between the actual input, as recognized by the HWR system 114, and the displayed input is known by the computing device, such that user interaction with the digital ink, for example, to edit the content, is performed in relation to the underlying recognition. This 'marrying' of the recognized ink and digital ink forms 'ink objects'. Each ink object may comprise metadata including information similar to that of the digital objects, but also further information related to the recognition processing.

The identification module MD2 may be configured to interpret the typeset input, directly into 'digital objects' (e.g., the typed letter "E" as depicted in this text is a digital object), that is, if the digital content is inputted to the computing device 100 by typing using keyboard, the keyboard or typing decoder of the computing device 100, e.g., provided as an application in the memory 108, as part of the operation system 110, or in the present system and method as part of the ink management system 112, would interpret and encode each element or object of the content, being the phrases itself, the words and symbols (e.g., grammatical marks, such as periods, commas) contained in the phrases and the characters or letters contained in the words, in the digital content. Similar management may also apply if the digital content is inputted via other means, such as optical character recognition (OCR) from digital or non-digital (e.g., paper ink) handwriting. This digital content may be handled by the computing device 100 in a well understood manner, with each digital character treated as a digital object. In this way, functions such as input or editing with the digital content can be made in relation to each digital object.

The modification type selection module MD4 is configured to select a modification type. The modification type may be any formatting or editing operation performed on at least part of the digital content. For example, the modification type is an erasing operation or a highlighting operation. The module MD4 may be configured to select the modification type in response to a user interaction, for instance a user interaction with tools, such as keyboard, UI buttons or menus, or through gestures and their characteristics provided by the input surface such as the speed, the pressure or the detection of a specific interactive pen or tool configured to be detected as an eraser or a highlighter.

The mode type selection module MD6 is configured to select a mode type MT, wherein said mode type is object-mode or pixel-mode. As described further below in particular embodiments, selection of a mode type MT is made to modify digital content in said selected mode-type.

The mode type selection module MD6 may be configured to select the mode type MT by accepting an input, for instance through user interaction with tools, such as keyboard, UI buttons or menus or a gesture. The user may subsequently operate the selected modification type MT such as erasing, marking, highlighting part of the digital content by further performing a gesture.

Thereafter, the input surface 104 is configured to detect a modification gesture wherein one or more boundaries of the modification gesture are intersecting with at least part of the digital content. In other terms, the modification gesture detected by the input surface 104 defines a selection area which is delimited by one or more boundaries (or borders, or limits). More particularly, the modification gesture may define a hand-drawn path, wherein the one or more boundaries correspond to a perimeter or contour of this path.

In one embodiment, one or more characteristics of the detected modification gesture such as its direction, speed, pressure or the like may modify the outcome of the mode type selection module MD8 and cause switching from one selected mode type MT to another mode type. In other words, the mode type selection mode MD8 may be configured to select or adapt the mode type MT based on one or more characteristics of the detected modification gesture. Therefore, the user may change of mode type MT without interrupting the input, such as interacting with a keyboard, a UI button or a menu, thereby improving the performances of the computing device as the user can enter and edit in a faster and more accurate fashion digital content. The selection of the mode type is performed through the detection of the characteristics of the modification gesture.

A selection module MD8 is configured to select, at least partially, the digital content according to the selected mode type MT and comprises a first selection module SM1 (also named object selector) and a second selection module SM2 (also named pixel selector).

The object selection module SM1 is configured to select one or more objects of the digital content when the selected mode type MT is object-mode, wherein the selected one or more objects are intersecting, at least partially, with the one or more boundaries of the modification gesture. The intersection may be evaluated (or detected) by determining an overlapping area between the boundaries of the modification gesture and bounding boxes of the one or more selected objects.

In one example, the object selection module SM1 may select the one or more objects such as characters, words, phrases, or shapes. The object selection module SM1 may select the one or more objects according to a predetermined criterion, for example the determined overlapping area has to be over a predetermined value or the determined overlapping area has to contact the center of geometry of the one or more objects.

The pixel selection module SM2 is configured to select one or more pixels of the digital content when the selected mode type is pixel-mode, wherein the selected one or more pixels are contained (at least partially) within the boundaries of the modification gesture.

In one example, the pixel selection module SM2 is configured to select one or more segments when the selected mode type is pixel-mode, wherein the selected one or more segments are contained within the boundaries of the modification gesture.

The input management system 112, or the input recognition system 114, may be configured to determine the boundaries of the hand-drawn path performed through the modification gesture. All pixels included (at least partially) within the boundaries of the hand-drawn path performed through the modification gesture may be selected for further processing. The selected one or more pixels may encounter a modification of their rendering.

A modification module MD10 is configured to modify at least the selected digital content. To this end, the modification module MD10 comprises an object modification module (or an object modificator) MM1 and a pixel modification module (or pixel modificator) MM2.

The object modification module MM1 is configured to modify at least the selected one or more objects of the digital content when (if) the mode type MT is object-mode.

The object modification module MM1 is configured to modify at least the selected one or more objects according to different embodiments.

According to a particular embodiment, the modification module MD10 is configured to modify at least the selected digital content according to the selected modification type. However, as already indicated, other embodiments are possible without the modification type selection module MD4.

According to one embodiment, the object modification module MM1 modifies the rendering of at least the selected one or more objects such as formatting at least the selected one or more objects (e.g. a character, a word, a phrase) such as highlighting that can be routinely handled by the ink management system 112.

According to another embodiment, the object modification module MM1 erases at least the selected one or more objects. Full deletion of a character, a word, a phrase can be routinely handled by the ink management system 112.

The pixel modification module MM2 is configured to modify at least the selected one or more pixels of the digital content, when (if) the mode type MT is pixel-mode.

According to one embodiment, the pixel modification module MM2 causes the selected one or more pixels to be colored or marked according to the boundaries of the modification gesture.

According to another embodiment, the pixel modification module MM2 causes the selected one or more pixels contained within the boundaries of the modification gesture to be erased. The digital content is re-rendered as edited digital content. The edition of the selected one or more pixel may be accompanied by any suitable further recognition of the edited digital content. The pixel modification module MM2 may adjust the recognition of the edited digital content by the HWR system 114.

In another example, the pixel modification module MM2 causes the selected one or more segments to be erased.

FIG. 5.A, 5.B, 5.C and 5.D illustrate an example of one embodiment of the present invention related to the pixel selection module SM2 and the pixel modification module MM2 configured to erase the selected pixels, when the selected mode type is pixel-mode.

FIG. 5.A shows, on the display interface 102 of the computing device 100, two text lines 510 and 520 as digital content that may be entered, for instance, in the input area 400 (as shown in FIG 4A) on (along) the lines of the line pattern 410. Alternatively, the two text lines may be input on a constraint-free canvas that allows users to create object blocks (blocks of text, drawing, etc.) anywhere without worrying about sizing or alignment. The first text line 510 is rendered as digital ink as handwritten input including several input strokes representing text characters distributed into five words of a phrase "Erasing ink in pixel-mode.", including a first word "Erasing" 511. The second text line 520 is rendered as typeset ink or typeset input including six sequences of typeset characters distributed into six words of a phrase "Erasing converted ink in pixel-mode." including a second word "Erasing" 521. The typeset content of the second line may have been introduced directly in typeset format as typed content (e.g. using a keyboard or a copy-paste function) or it may be the result of a recognition operation on a handwriting input.

FIG. 5.B shows, on the display interface 102 of the computing device 100, two text lines 510 and 520 and a hand-drawn path 10 represented by a perimeter or contour (or a boundary), filled in grey as an example to visualize the hand-drawn path on the figure and optionally represented on the display interface 102 of the computing device 100 possibly with various visual aspects such as a line contour or a filled contour of the hand-drawn path 10. The hand-drawn path 10 is the physical trace of a gesture 15 (i.e. a modification gesture), symbolized by the dashed grey arrow on FIG. 5.B, detected by the computing device via the input surface 104. In other words, the modification gesture 15 defines the hand-drawn path 10 which is delimited by a boundary (or contour). The modification gesture 15 is made by the user with e.g., a finger or a pen to perform a modification including editing or formatting, for example erasing the digital content of the input surface 104. The modification gesture 15 may be performed using a users' finger, a stylus or pen or any other device or tool for making or capturing handwritten content or gesture. The hand-drawn path 10 is resulting from the modification gesture 15 and delimits (defines) the boundaries of the modification gesture performed on the digital content. The hand-drawn path 10 is intersecting the first handwritten word 511 and the second typeset word 521. The shape and the size of the hand-drawn path 10 may depend on the pen tool, settings and thickness. The modification gesture 15 may be inputted by the user in different directions, for example from the above-right side to the bottom-left side. The modification gesture 15 may be inputted with a particular angle, a particular pressure, a particular speed. The first handwritten word 511 of the first line and the second typeset word 521 of the second line of FIG. 5.A are both altered, herein erased, within the hand-drawn path perimeter also referred as modification gesture boundaries intersecting at least part of the first and second words. The modified words result in fours elements, a first and a second elements 5111 and 5112 of the first handwritten word 511 and a third and a fourth elements 5211 and 5212 of the second typeset word 521. The elements are partial characters or sequences of characters of the original first and second words 511 and 521 of FIG. 5.A.

In one example, FIG. 5.C shows, on the display interface 102 of the computing device 100, two text lines 530 and 540 of FIG. 5.B as digital content resulting from the erasure operation performed on the digital content of FIG. 5.A. The digital content of FIG. 5.A has been erased following the selection of a mode-type as pixel-mode, the detection of the modification gesture 15 and according to the hand-drawn path perimeter 10. The first line includes the first and the second digital ink elements 5111 and 5112. The second line includes the third and the fourth typeset ink elements 5211 and 5212. Following of the modification operation of erasure performed according to the modification gesture, pixels or ink points of the digital ink of the original first word 511 have been erased within the intersecting hand-drawn path perimeter of FIG. 5.B. Likewise, pixels or ink points of the typeset ink of the original second word 521 have been erased within the intersecting hand-drawn path perimeter of FIG. 5.B. Alternatively, following of the erasure performed according to the modification gesture, sub-strokes or segments of the digital ink of the original first word 511 may be erased if the plurality of ink points corresponding to the respective segments or the corresponding respective sub-strokes are contained within the boundaries of the modification gesture. Such a segment represents a minimum ink unit identifiable by the ink management system 112 for modifying digital ink. Likewise, pixels of the typeset ink of the original second word 521 have been erased within the boundaries the modification gesture of FIG. 5.B.

The erasure of the typeset ink and the digital ink by the ink management system 112 is similar for both types of input. Both input types have been partially erased at pixel level following the modification gesture 15 and according to the boundaries of the resulting hand-drawn path 10.

As a result of the erasure of the typeset ink and the digital ink of FIG. 5.C, FIG. 5.D shows, on the display interface 102 of the computing device 100, three text lines 550, 560 and 570 rendered as typeset ink. The first line 550 shows five sequences of typeset characters "Erasi ink in pixel-mode.". The second line 560 shows one typeset character '°', known as degree character. The third line 570 shows seven sequences of typeset characters "I sing converted ink in pixel-mode.". The three lines 550, 560 and 570 are resulting from the recognition of the erased digital content of FIG. 5.C by the HWR system 114. The part of the digital ink, recognized as being erased, is removed from the digital ink and the modified digital ink is adapted accordingly and displayed as typeset ink without the removed part of the digital ink. As explained thereover, in the recognition process the input strokes may be segmented to determine probable character candidates. The computing device 100 may thus processe the erased content of FIG. 5.C by segmenting the remaining handwritten content after a portion has been erased and the remaining typeset content in a same approach taken by the present computing device 100 and associated methods for recognizing handwritten input strokes. For example, the recognition may be performed using the process described in EP1836651A1. FIG. 5.D shows a typeset ink version of the recognized lines 530 and 540 of FIG. 5.C. Recognition candidates of the elements 5111, 5112, 5211 and 5212 of FIG. 5.C by the HWR system 114 are respectively: a character sequence "Erasi", a character degree "°", a character "I", a character sequence "sing". These recognition candidates are displayed as typeset characters on the first, second and third lines 550, 560 and 570 of FIG. 5.D. The element 5112 arising from the erasure of the word 511 "Erasing" of FIG. 5.A is recognized as a character degree "°" below the first line 550 and is displayed as a typeset character on the new second line 560 of FIG. 5.D. The elements 5211 and 5212 are recognized as two new words "I sing" on a new third line 570. Then a typeset version of the recognized digital ink and a new typeset version of the recognized typeset ink is displayed on FIG. 5.D. This feature allows the user to partially erase a character, for example a diacritic, and intuitively correct a misspelt accent. Indeed, it may be wished to erase a diacritic or an accent inputted as a handwritten input stroke over a handwritten or typeset base character, as described in European Patent Application N° 21305042.0 filed in the name of the present Applicant and Assignee, and to erase a diacritic of a misspelt typeset base character. However, the resulting digital ink content and the resulting typeset ink content may differ depending on settings selectable from settings menu or other tool bar options or characteristics of modification gesture 15 such as the gesture speed or the pressure provided with the gesture by the input surface.

FIG. 6.A, 6.B and 6.C illustrate an example of the one embodiment of the present invention related to the pixel selection module SM2 and the pixel modification module MM2 configured to erase the selected pixels, when the selected mode type is pixel-mode.

FIG. 6.A shows, on the display interface 102 of the computing device 100, two geometric shapes 610 and 620 as digital content, for instance on a constraint-free canvas that allows users to create object blocks anywhere on a page or a section (although shapes may be entered and displayed in other environments, such as in a display area with guidelines or the like). In the present example, the first geometric shape 610 is rendered as digital ink or hand-drawn content resulting from a hand-drawn input representing a rectangle. The recognition stage 118 determines that the hand-drawn input is a shape such as a rectangle.

The second geometric shape 620 is rendered as typeset ink or typeset content representing a polyline such as an elbowed line. The typeset content of the second geometric shape may have been introduced directly in typeset format (e.g. using an insertion menu or a copy-paste function) or it may be the result of a conversion operation on a hand-drawn input.

FIG. 6.B shows, on the display interface 102 of the computing device 100, the rectangle 610 and the polyline 620 of FIG. 6.A and a hand-drawn path 20 represented by a perimeter or contour, filled in grey on the FIG. 6.B.

The hand-drawn path 20 is the physical trace or boundaries of a modification gesture 25, symbolized by the dashed grey arrow on FIG. 6.B, detected by the computing device via the input surface 104. The modification gesture 25 is made by the user with e.g., a finger or a pen as described thereover. The hand-drawn path 20 is resulting from (defined by) the modification gesture 25 for performing a modification on the digital content, for example an erasure of digital content. In other words, the modification gesture 25 defines the hand-drawn path 20 which is delimited by a boundary (or contour). The hand-drawn path 20 is intersecting the first geometric shape 610 and the second geometric shape 620 of FIG. 6.A. The shape and the size of the hand-drawn path may depend on the pen tool, settings, and thickness. The modification gesture 25 may be performed by the user in different directions, for example from the right side to the left side. The modification gesture 25 may be inputted with a certain pressure or a certain speed.

The hand-drawn path perimeter 20 is intersecting the first hand-drawn geometric shape 610 by partially overlapping a hand-drawn right side or the rectangle 610.

The hand-drawn path perimeter 20 is intersecting the second typeset geometric shape 620 by partially overlapping a second segment of the polyline 620.

In one example, FIG. 6.C shows, on the display interface 102 of the computing device 100, digital content resulting from the erasure operation performed on the digital content of FIG. 6.A. The digital content of FIG. 6.A has been erased following the selection of a mode-type as pixel-mode, the detection of the modification gesture 25 and according to the hand-drawn path perimeter 20. The first geometric shape 630 is rendered as hand-drawn content including three polyline elements 6301, 6302, 6303. The second geometric shape 640 is rendered as typeset content including two polyline elements 6401 and 6402.

As explained thereover, in the recognition process the input strokes may be segmented to determine probable object candidates. The computing device 100 may process the erased content of FIG. 6.C by segmenting the erased handwritten content and the erased typeset content in a same approach taken by the present computing device 100 and associated methods for recognizing handwritten input strokes.

In another example (not shown), the digital content of FIG. 6.A has been totally erased following the selection of the mode-type as object-mode, the detection of the modification gesture 25 and according to the hand-drawn path perimeter 20.

Hand-drawn input type and typeset input type may be modified by erasing objects or strokes, included, or partially included within the perimeter of the hand-drawn path 20. The scope of the objects selected for modification by the ink management system 112 may depend on settings selectable from setting menu or other tool bar options or characteristics of detected gesture 25 such as the speed or the pressure provided with the gesture by the input surface.

In another example, FIG. 6.D shows, on the display interface 102 of the computing device 100, digital content resulting from a modification performed on the digital content of FIG. 6.A. The digital content of FIG. 6.A has been formatted following the selection of a mode-type as pixel-mode, the detection of the modification gesture 25 and according to the hand-drawn path perimeter 20. A first geometric shape 650 is rendered as hand-drawn content including a first portion 6501 of the first geometric shape represented as a first dashed line portion. The second geometric shape 660 is rendered as typeset content including two polyline elements 6501 and a second portion 6601 of the second geometric shape represented as a second dashed line portion. The first and second dashed line portions 6501 and 6601 correspond to the intersection of the first hand-drawn geometric shape 610 and the second typeset geometric shape 620 with the hand-drawn path perimeter 20. The dashed line portions represent a modification of the digital content for example making a dashed line (as shown on the FIG. 6.D) or any other formatting operation available through the system such as making bold or highlighting the corresponding portion of the digital content.

FIG. 7.A, 7.B, 7.C and 7.D illustrate an example of one embodiment of the present invention related to the object selection module SM1 and the object modification module MM1 configured to erase the selected objects, when the selected mode type is object-mode.

FIG. 7.A shows, on the display interface 102 of the computing device 100, two text lines as digital content to the input area 400 on the lines of the line pattern 410. Alternatively, the two text lines may be input on a constraint-free canvas (or any other appropriate environment) that allows users to create object blocks (blocks of text, drawing, etc.) anywhere without worrying about sizing or alignment. The first text line 710 is rendered as digital ink as handwritten input including several input strokes representing text characters distributed into five words of a phrase "Erasing ink in object-mode.", including a first word "Erasing" 711. The second text line 720 is rendered as typeset ink or typeset content including six sequences of typeset characters distributed into six words of a phrase "Erasing converted ink in object-mode." including a second word "Erasing" 721. The typeset content of the second line may have been introduced directly in typeset format (e.g. using a keyboard or a copy-paste function) or it may be the result of a conversion operation on a handwriting input.

FIG. 7.B shows, on the display interface 102 of the computing device 100, the two text lines 710 and 720 of FIG. 7.A and a hand-drawn path 30 represented by a perimeter or contour, filled in grey on the FIG. 7.B as an example to visualize the hand-drawn path on the figure and optionally represented on the display interface 102 of the computing device 100 possibly with various visual aspects such as a line contour or a filled contour of the hand-drawn path 30. The hand-drawn path 30 is the physical trace or boundaries of a modification gesture 35, symbolized by the dashed grey arrow on FIG. 7.B, detected by the computing device via the input surface 104. In other words, the modification gesture 35 defines the hand-drawn path 30 which is delimited by a boundary (or contour). The gesture 35 is made by the user with e.g., a finger or a pen as described thereover. The hand-drawn path 30 is resulting from the gesture for performing a modification on the digital content, for example an erasure of digital content. The hand-drawn path 30 is intersecting the first handwritten word 711 and the second typeset word 721 of FIG. 7.A. The shape and the size of the hand-drawn path may depend on the pen tool, settings and thickness. The gesture 35 may be performed by the user in different directions, for example from the above-right side to the bottom-left side. The gesture 35 may be inputted with a particular angle, a particular pressure or a particular speed.

The hand-drawn path 30 has been inputted over the first handwritten word 711 of the first line and the second typeset word 721 of the second line of FIG. 7.A.

The hand-drawn path perimeter 30 is intersecting the first handwritten word 711 by partially overlapping handwritten character bounds or extents of the third, fourth, fifth, sixth characters 'r', 'a', 's', 'i'. A handwritten character's bound or extent is determined by the segmentation expert 122 of the HWR system 114 as further explained thereover.

Alternatively, the hand-drawn path perimeter 30 is intersecting the first handwritten word 711 by partially overlapping a bound or extent of the word 711.

Alternatively, the hand-drawn path perimeter 30 is intersecting the first line 710 included in a first paragraph or a first text block by partially overlapping a bound or extent of the first line, paragraph or text block.

The hand-drawn path perimeter 30 is intersecting the second typeset word 711 by partially overlapping the typeset character bounds or extend of the first and second 'E', 'r'. A typeset character bound or extend is a character bounding box defined by a character height and a character width determined by the ink management system 112.

Alternatively, the hand-drawn path perimeter 30 is intersecting the second typeset word 721 by partially overlapping a bound or extent of the word 721 determined by the ink management system 112. A typeset word bound or extend is a word bounding box defined by the ink management system 112.

Alternatively, the hand-drawn path 30 is intersecting the second line 720 included in a second paragraph or a second text block by partially overlapping a bound or extent of the second line, paragraph or text block determined by the ink management system 112.

In one example, FIG. 7.C shows, on the display interface 102 of the computing device 100, two text lines 730 and 740 resulting from the erasure operation performed following the detected gesture 35 and according to the hand-drawn path perimeter 30. The first line 730 is rendered as handwritten content including four words " ink in object-mode". The second line 740 is rendered as typeset content including five words "converted ink in object-mode". The digital ink of the original word 711 and the typeset ink of the original word 721 have been erased following the modification operation of erasure performed according to the gesture 30.

In another example, FIG. 7.D shows, on the display interface 102 of the computing device 100, two text lines 750 and 760 resulting from the erasure operation performed following the detected gesture 35 and according to the hand-drawn path perimeter 30.

The intersected handwritten characters of the original first word 711 and the intersected typeset characters of the original second word 721 have been erased following the modification operation of erasure according to the detected gesture 35 and according to the hand-drawn path perimeter 30. In another example, the two text lines 750 and 760 are resulting from the erasure of the handwritten input strokes corresponding to the third, fourth, fifth, sixth characters 'r', 'a', 's', 'i' of the word 711 and from the erasure of the typeset character strokes corresponding to the first and second character 'E', 'r' f the word 721, respectively.

The erasure of the typeset ink and the digital ink by the ink management system 112 is analogous for both types of input. Both input types have been modified by erasing objects, e.g. character, words or phrases but also strokes, included or partially included within the perimeter of the hand-drawn path 30. The scope of the objects selected for modification by the ink management system 112 may depend on settings selectable from a settings menu or other tool bar options or characteristics of detected gesture 35 such as the speed or the pressure provided with the gesture by the input surface.

FIG. 8.A, 8.B, and 8.C illustrate an example of one embodiment of the present invention related to the pixel selection module SM2 and the pixel modification module MM2 configured to highlight or mark the selected pixel, when the selected mode type is pixel-mode.

FIG. 8.A shows, on the display interface 102 of the computing device 100, two text lines 810 and 820 as digital content to the input area 400 on the lines of the line pattern 410.

Alternatively, the two text lines 810 and 820 may be input on a constraint-free canvas that allows users to create object blocks (blocks of text, drawing, etc.) anywhere without worrying about sizing or alignment. The first text line 810 is rendered as handwritten input including several input strokes representing two words "Highlighting ink", including a first word "Highlighting" 811. The second text line 820 is rendered as typeset input as three words "Highlighting converted ink" including a second word "Highlighting" 821. The typeset content of the second line may have been introduced directly in typeset format (e.g. using a keyboard or a copy-paste function) or it may be the result of a conversion operation on a handwriting input.

FIG. 8.B shows, on the display interface 102 of the computing device 100, two text lines 830 and 840 and a hand-drawn path 40 represented by a perimeter or contour, filled in grey on the FIG. 8.B as an example on the figure and represented on the display interface 102 of the computing device 100. The hand-drawn path 40 is intersecting the first and second lines 810 and 820 of FIG. 8.A. The hand-drawn path 40 is inputted via a modification gesture 45, symbolized by the dashed grey arrow on FIG. 8.B, detected by the computing device by the input surface 104. The hand-drawn path 40 is the physical trace or boundaries of the modification gesture 45. In other words, the modification gesture 45 defines the hand-drawn path 40 which is delimited by a boundary (or contour). The gesture 45 is made by the user with e.g., a finger or a pen as described thereover. The hand-drawn path 40 is resulting from the gesture for performing a modification on the digital content, for example marking or highlighting the digital content.

According to a first example shown in FIG. 8.B, the hand-drawn path 40 is a hand-drawn input stroke represented on the display interface 102 of the computing device 100. The hand-drawn input stroke is made by the user with e.g., a finger or a pen. The shape and the size of the hand-drawn input stroke may depend on the pen tool, settings and thickness. The gesture 45 may be performed by the user in different directions, for example from the above-right side to the bottom-left side. The gesture 45 may be performed with a particular angle, a particular pressure or a particular speed. The hand-drawn input stroke has been inputted over the first handwritten word 811 and the second typeset word 821 of FIG. 8.A.

The gesture 45 results in a modification of the digital content of FIG. 8.A The modified content is displayed as the two text lines 830 and 840 including the hand-drawn input stroke as shown in FIG. 8.C.

FIG. 8.C shows, on the display interface 102 of the computing device 100, the two text lines 830 and 840 of FIG. 8.B including the hand-drawn input stroke. Following of the operation of marking the digital content performed according to the modification gesture, pixels of the the original handwritten ink of the word 811 and the original typeset word have been marked within the modification gesture boundaries of FIG. 8.B.

The marking of the typeset ink and the digital ink is similar for both types of input.

FIG. 8.A, 8.B, 8.D and 8.E illustrate an example of one embodiment of the present invention related to the object selection module SM1 and the object modification module MM1 configured to highlight or mark the selected objects, when the selected mode type is object-mode.

FIG. 8.D shows, on the display interface 102 of the computing device 100, two text lines 850 and 860 following resulting from the highlighting operation performed following the detected gesture 45 and according to the hand-drawn path perimeter 40 and a mode-type selected as object-mode. The digital ink of the original first word 811 and the typeset ink of the original second word 821 have been highlighted with a background color.

When the selected mode-type is object-mode, the hand-drawn path 40 is intersecting the first handwritten word 811 by partially overlapping a bound or extent of the word 811 and the second typeset word 821 by partially overlapping a bound or extent of the word 821.

In another example, the two text lines 850 and 860 are resulting from the highlighting of the handwritten input strokes corresponding to the third, fourth, fifth, sixth and seventh characters 'g', 'h', 'l', 'i' and 'g' of the word 811 and from the highlighting of the typeset character strokes corresponding to the first, second, third and fourth characters 'H', 'i', 'g' and 'h' the word 821.

Alternatively, the hand-drawn path 40 is intersecting the first line 810 included in a first paragraph or a first text block by partially intersecting a bound or extent of the first line, paragraph or text block and the second line 820 included in a second paragraph or a second text block by partially overlapping a bound or extent of the second line, paragraph or text block. The words, the blocks or the paragraphs are modified following the detection of gesture 40 as shown in the example of FIG. 8.D. In other examples not shown, the entire phrases or paragraphs of the two text lines may be selected and modified following the modification operation of highlighting according to the detected gesture 45 and its characteristics.

In another example, FIG. 8.E shows, on the display interface 102 of the computing device 100, two text lines 870 and 880 including highlighted characters of the original handwritten word 811 and the original typeset word 821, resulting from the highlighting modification performed following the detected gesture 45 and according to the hand-drawn path perimeter 40.

The handwritten characters which bounding boxes intersected the hand-drawn path perimeter 40 have been highlighted accordingly.

The highlighting of the typeset ink and the digital ink by the ink management system 112 is similar for both types of input.

The objects such as words, phrases or paragraphs and strokes may be highlighted with a background color. The shape and the size of the highlighting background color may depend on the pen tool and settings, it may be a rectangle or a wavy shape background corresponding to the object selected.

The highlighting of the typeset ink and the digital ink by the ink management system 112 is similar for both types of input. Both input types have been modified by highlighting objects, e.g. words or phrases, included or partially included within the perimeter of the hand-drawn path 40. The scope of the objects selected for modification by the ink management system 112 may depend on settings selectable from setting menu or other tool bar options or characteristics of detected gesture 45 such as the speed, the pressure provided with the gesture by the input surface.

A method implemented, by the computing device 100 (as described earlier with reference notably to FIG. 1-8) for performing a modification on digital content of a document in a pixel-mode or an object-mode, is now described with reference to FIG. 9, in accordance with a particular embodiment of the present invention.

An example scenario is considered where the computing device 100 has previously acquired by any suitable manner a digital document that contains digital content, i.e. a handwritten input or a typeset input represented by digital ink.

In a displaying step S900, the computing device 100 displays the digital document as a handwritten input or a typeset input on the display interface 102.

In an identification step S902, the computing device 100 interprets the digital content (i.e. the handwritten input or the typeset input) as one or more objects.

More specifically, the computing device 100 implements in this particular example the HWR system 114 to interpret the handwritten input as detailed thereover in FIG. 2. The HWR system 114 outputs a list of element candidates with probabilities or objects such as alphanumeric characters, mathematical operator, text characters, individual shapes, or sub-expression in order to form expression such as words, mathematical equations, or groups of shapes.

And the computing device 100 implements the ink management system 112 to interpret the typeset input, directly into 'digital objects. If the digital content is inputted to the computing device 100 by typing using keyboard, the keyboard or typing decoder of the computing device 100, the ink management system interprets and encodes each element or object of the digital content such as alphanumeric characters, mathematical operator, text characters, individual shapes, or sub-expression in order to form expression such as words, mathematical equations, or groups of shapes. Other ways of interpretation digital content may however be contemplated to implement the present invention.

In a modification type selection step S904, the computing device may select a modification type MT as described thereover, for instance through user interaction with tools, such as keyboard, UI buttons or menus or a gesture. The user may wish to operate different modifications such as erasing, marking, highlighting part of the digital content.

In a mode type selection step S906, the computing device selects a mode type MT wherein said mode type is pixel-mode or object-mode. The computing device selects a mode type MT for instance by accepting an input through user interaction with tools, such as keyboard, UI buttons or menus or a gesture. In one example, the computing device may select a mode type by assessing (analysing) one or more characteristics of a mode type selecting gesture, for example at least one of a speed of the gesture and a direction of the gesture. In one embodiment, the mode type selecting gesture is also the modification gesture of a following detecting step S908. In a variant, the mode type selecting gesture and the modification gesture are two different gestures performed by a user by interacting with the computing device.

Then, the user may further operate the selected modification type according to the selected mode-type by further performing a modification gesture.

In a detecting step S908, the computing device detects a modification gesture wherein one or more boundaries of the modification gesture is intersecting with at least part of the digital content. As previously described, the modification gesture detected by the input surface 104 may define a hand-drawn path, wherein the one or more boundaries correspond to a perimeter or contour of this path. In other words, the path defined by the modification gesture is delimited by one or more boundaries which are used for selection as described further below. Characteristics of the modification gesture are, for example a speed of the gesture, a direction of the gesture, a pressure of the pen for performing the gesture. In one embodiment, the characteristics of the modification gesture may cause the computing device to select the mode type as described in step S906.

In a selection step S910, the computing device selects, at least partially, the digital content according to the selected mode type MT.

In a selection step S9100, when (or if) the selected mode type MT is object-mode, the computing device selects, one or more objects of the digital content, wherein the at least selected object is intersecting, at least partially, with one or more boundaries of the modification gesture.

In a selection step S9105, when (or if) the selected mode type MT is pixel-mode, the computing device selects, one or more pixels of the digital content, wherein the selected one or more pixel are contained within the boundaries of the modification gesture.

In a modification step S912, the computing device modifies at least the selected digital content, that is, at least the digital content selected in selection step S910. In the present example, the computing device modifies at least the selected digital content according to the selected modification type, that is, the modification type selected in selection step S904. However, as already indicated, other embodiments are possible where the selection step S904 is not performed such that no modification type is selected. In a variant, the selection step S904 is performed after the step S908 or even S910.

In a modification step S9120, when (or if) the mode type is object mode, the computing device modifies at least the selected one or more objects of the digital content. In one example, the selected modification type is highlighting, therefore the computing device is coloring the background of the at least selected objects while the ink of the content is unchanged. In another example, the selected modification type is editing such as erasing, therefore the computing device is erasing the at least selected objects.

In a modification step S9125, when (or if) the mode type is pixel mode, the computing device modifies at least the selected one or more pixels of the digital content. In one example, the selected modification type is formatting such as changing the color, therefore the computing device is formatting the at least selected pixel. In another example, the selected modification type is editing such as erasing, therefore the computing device is setting the at least selected pixel to an existing background color.

In one embodiment in the step S900, the computing device is displaying the digital content as a handwritten input and a typeset input on the display interface. In the identification step S902, the computing device is therefore identifying the handwritten input and the typeset input as at least one first object and at least one second object, respectively. The modification type selection step S904 and the mode type selection step S906 allow the selection of a modification type and a mode type as explained earlier. Thereafter, in the detecting step S908, the computing device detects a modification gesture wherein at least a boundary of the modification gesture is intersecting at least part of the first object and at least part of the second object. In the selection step S910, the computing device selects, at least partially, the digital content according to the selected mode type. In a modification step S9120, when the selected mode type is object mode, the computing device selects at least the first object and at least the second object. In a modification step S9125, when the selected mode type is pixel mode, the computing device selects at least a pixel of the first object and at least a pixel of the second object, wherein the selected pixels are contained within boundaries of the detected modification gesture. In the following modification step S912, the computing device is modifying at least the selected digital content as described thereover.

Although the typeset input and the handwritten input are handled differently by the computing device, the simultaneous edition or formatting of the typeset ink and the digital ink through a single modification gesture is resulting in a similar rendering of both input types at pixel level or at object level depending on the selected mode-type. Both input types may be modified at pixel level, e.g., erased or colored, following one modification gesture in pixel-mode. Both input types including ink objects and digital objects may be modified at object level, e.g., erased or highlighted, following one modification gesture in object-mode.

Fast and accurate editing on digital content can thus be achieved thanks to the invention, even when various kinds of content are involved. In particular, the invention allows handling modifications of mixed input type digital content in a more efficient and productive way by reducing time and enhancing consistency of modifying digital content.

## Claims

1. Computing device (100) for performing a modification on digital content of a document, comprising:
a. a display interface (102) configured to display the digital content as a handwritten input or a typeset input;
b. an identification module (MD2) configured to interpret the digital content as one or more objects;
c. a mode type selection module (MD6) configured to select a mode type, wherein said mode type is pixel-mode or object-mode;
d. an input surface (104) configured to detect a modification gesture wherein one or more boundaries of the modification gesture are intersecting with at least part of the digital content;
e. a selection module (MD8) configured to select, at least partially, the digital content according to the selected mode type, the selection module (MD8) comprising:
i. an object selection module (SM1), configured to select one or more objects of the digital content when the selected mode type is object-mode, wherein the selected one or more object are intersecting, at least partially, with the one or more boundaries of the detected modification gesture; and
ii. a pixel selection module (SM2) configured to select one or more pixels of the digital content when the selected mode type is pixel-mode, wherein the selected one or more pixels are contained within the one or more boundaries of the detected modification gesture; and
f. a modification module (MD10) configured to modify the selected digital content;
**characterised in that**:
the mode type selection module is configured to detect the selected mode type by assessing at least one characteristic of the modification gesture,
wherein said at least one characteristic of the modification gesture comprises one of speed, direction, and pressure of the modification gesture.

2. Computing device of claim 1, comprising: a modification type selection module (MD4) configured to select a modification type, wherein the modification module (MD10) is configured to modify the selected digital content according to the selected modification type.

3. Computing device of claim 1 or 2, wherein the one or more objects of the digital ink comprises characters, words, paragraphs or shapes.

4. Computing device of any one of claims 1 to 3, wherein the digital content is interpreted as a plurality of segments and wherein the pixel selection module is configured to select one or more segments of the digital content intersecting within the one or more boundaries of the detected modification gesture, said pixel modification module being configured to modify the selected one or more segments.

5. Computing device of any of claim 1 to 4, wherein the object modification module (MM1) is configured to format the selected one or more objects and the pixel modification module (MM2) is configured to change the rendering the selected one or more pixels when the selected mode type is object-mode and pixel-mode, respectively.

6. Computing device of any of claim 1 to 5, wherein the object modification module (MM1) is configured to erase the selected one or more objects and the pixel modification module (MM2) is configured to erase the selected one or more pixels, when the selected mode type is object-mode and pixel-mode, respectively.

7. Computing device of any one of claims 1 to 6, wherein the mode type selection module is configured to select the mode type through interaction with a tool comprising at least one of a keyboard, UI buttons or a menu.

8. Computing device of claim 7, wherein said at least one characteristic of the selecting gesture comprises a first characteristic defined as a speed of the selecting gesture.

9. Computing device of claim 8, wherein said at least one characteristic of the selecting gesture comprises a second characteristic defined as a direction of the selecting gesture.

10. A method for performing a modification on digital content of a document in a pixel-mode or an object-mode, comprising:
a. displaying the digital content as a handwritten input or a typeset input;
b. interpreting the digital content as one or more objects;
c. selecting a mode type, wherein said mode type is pixel-mode or object-mode;
d. detecting one or more boundaries of a modification gesture intersecting at least part of the digital content;
e. selecting, at least partially, the digital content , said selecting comprising:
i. selecting one or more objects of the digital content when the selected mode type (MT) is object-mode, wherein the selected one or more objects are intersecting, at least partially, with the one or more boundaries of the modification gesture;
ii. selecting one or more pixels of the digital content when the selected mode type (MT) is pixel-mode, wherein the selected one or more pixels are contained within the one or more boundaries of the modification gesture;
f. modifying at least the selected digital content, said modifying comprising:
i. modifying at least the selected one or more objects of the digital content when the mode type is object-mode.
ii. modifying at least the selected one or more pixels of the digital content when the mode type is pixel-mode.
**characterised in that**:
in said selecting c., the mode type selected is detected by assessing at least one characteristic of the modification gesture,
wherein said at least one characteristic of the modification gesture comprises one of speed, direction, and pressure of the modification gesture.

11. Method of claim 10 wherein:
a. the displayed digital content comprises handwritten input and typeset input;
b. the identified handwritten input and typeset input are interpreted as at least one first object and at least one second object, respectively;
c. at least one boundary of the detected modification gesture is intersecting at least part of the first object and at least part of the second object;
d. the selected digital content comprises:
i. the first object and the second object when the selected mode type is object-mode; and
ii. at least one pixel of the handwritten input and at least one pixel of the typeset input when the selected mode type is pixel mode, wherein the selected at least one pixel is contained within the one or more boundaries of the modification gesture.

12. Method of claim 11 wherein:
the at least first object and the at least second object are formatted or edited, including highlighted or erased, by the object modification module (MM1);
the at least one pixel of the handwritten input and at least one pixel of the typeset input are modified, including colored or set to a background color, by the pixel modification module (MM2).

## Patentansprüche

1. Rechenvorrichtung (100) zum Durchführen einer Modifikation an dem digitalen Inhalt eines Dokuments, umfassend:
a. eine Anzeigeschnittstelle (102), die so konfiguriert ist, dass sie den digitalen Inhalt als handschriftliche Eingabe oder als Schriftsatz-Eingabe anzeigt;
b. ein Identifikationsmodul (MD2), das so konfiguriert ist, dass es den digitalen Inhalt als ein oder mehrere Objekte interpretiert;
c. ein Modustyp-Auswahlmodul (MD6), das so konfiguriert ist, dass es einen Modustyp auswählt, wobei der Modustyp Pixelmodus oder Objektmodus ist;
d. eine Eingabefläche (104), die so konfiguriert ist, dass sie eine Modifikationsgeste erkennt, wobei sich eine oder mehrere Grenzen der Modifikationsgeste mit mindestens einem Teil des digitalen Inhalts schneiden;
e. ein Auswahlmodul (MD8), das so konfiguriert ist, dass es mindestens teilweise den digitalen Inhalt entsprechend dem ausgewählten Modustyp auswählt, wobei das Auswahlmodul (MD8) Folgendes umfasst:
i. ein Objektauswahlmodul (SM1), das so konfiguriert ist, dass es ein oder mehrere Objekte des digitalen Inhalts auswählt, wenn der ausgewählte Modustyp der Objektmodus ist, wobei das ausgewählte eine oder die ausgewählten mehreren Objekte mindestens teilweise die eine oder die mehreren Grenzen der erkannten Modifikationsgeste schneiden; und
ii. ein Pixelauswahlmodul (SM2), das so konfiguriert ist, dass es ein oder mehrere Pixel des digitalen Inhalts auswählt, wenn der ausgewählte Modustyp der Pixelmodus ist, wobei das ausgewählte eine oder die ausgewählten mehreren Pixel innerhalb der einen oder mehreren Grenzen der erkannten Modifikationsgeste enthalten sind; und
f. ein Modifikationsmodul (MD10), das so konfiguriert ist, dass es den ausgewählten digitalen Inhalt modifiziert;
**dadurch gekennzeichnet, dass**:
das Modustyp-Auswahlmodul so konfiguriert ist, dass es den ausgewählten Modustyp erkennt, indem es mindestens ein Merkmal der Modifikationsgeste bewertet,
wobei das mindestens eine Merkmal der Modifikationsgeste eines von Geschwindigkeit, Richtung und Druck der Modifikationsgeste umfasst.

2. Rechenvorrichtung nach Anspruch 1, umfassend: ein Modifikationstyp-Auswahlmodul (MD4), das so konfiguriert ist, dass es einen Modifikationstyp auswählt, wobei das Modifikationsmodul (MD10) so konfiguriert ist, dass es den ausgewählten digitalen Inhalt entsprechend dem ausgewählten Modifikationstyp modifiziert.

3. Rechenvorrichtung nach Anspruch 1 oder 2, wobei das eine oder die mehreren Objekte der digitalen Tinte Zeichen, Wörter, Absätze oder Formen umfassen.

4. Rechenvorrichtung nach einem der Ansprüche 1 bis 3, wobei der digitale Inhalt als eine Vielzahl von Segmenten interpretiert wird und wobei das Pixelauswahlmodul so konfiguriert ist, dass es ein oder mehrere Segmente des digitalen Inhalts auswählt, die sich innerhalb der einen oder mehreren Grenzen der erkannten Modifikationsgeste schneiden, wobei das Pixelmodifikationsmodul so konfiguriert ist, dass es das ausgewählte eine oder die ausgewählten mehreren Segmente modifziert.

5. Rechenvorrichtung nach einem der Ansprüche 1 bis 4, wobei das Objektmodifikationsmodul (MM1) so konfiguriert ist, dass es das ausgewählte eine oder die ausgewählten mehreren Objekte formatiert, und das Pixelmodifikationsmodul (MM2) so konfiguriert ist, dass es die Wiedergabe des ausgewählten einen oder der ausgewählten mehreren Pixel ändert, wenn der ausgewählte Modustyp der Objektmodus bzw. der Pixelmodus ist.

6. Rechenvorrichtung nach einem der Ansprüche 1 bis 5, wobei das Objektmodifikationsmodul (MM1) so konfiguriert ist, dass es das ausgewählte eine oder die ausgewählten mehreren Objekte löscht, und das Pixelmodifikationsmodul (MM2) so konfiguriert ist, dass es das ausgewählte eine oder die ausgewählten mehreren Pixel löscht, wenn der ausgewählte Modustyp der Objektmodus bzw. der Pixelmodus ist.

7. Rechenvorrichtung nach einem der Ansprüche 1 bis 6, wobei das Modustyp-Auswahlmodul so konfiguriert ist, dass es den Modustyp durch Interaktion mit einem Werkzeug auswählt, das mindestens eines von einer Tastatur, Ul-Tasten oder einem Menü umfasst.

8. Rechenvorrichtung nach Anspruch 7, wobei das mindestens eine Merkmal der Auswahlgeste ein erstes Merkmal umfasst, das als Geschwindigkeit der Auswahlgeste definiert ist.

9. Rechenvorrichtung nach Anspruch 8, wobei das mindestens eine Merkmal der Auswahlgeste ein zweites Merkmal umfasst, das als Richtung der Auswahlgeste definiert ist.

10. Verfahren zum Durchführen einer Modifikation an digitalem Inhalt eines Dokuments in einem Pixelmodus oder einem Objektmodus, umfassend:
a. Anzeigen des digitalen Inhalts als handschriftliche Eingabe oder als Schriftsatz-Eingabe;
b. Interpretieren des digitalen Inhalts als ein oder mehrere Objekte;
c. Auswählen eines Modustyps, wobei der Modustyp der Pixelmodus oder der Objektmodus ist;
d. Erkennen einer oder mehrerer Grenzen einer Modifikationsgeste, die mindestens einen Teil des digitalen Inhalts schneiden;
e. Auswählen, mindestens teilweise, des digitalen Inhalts, wobei das Auswählen Folgendes umfasst:
i. Auswählen eines oder mehrerer Objekte des digitalen Inhalts, wenn der ausgewählte Modustyp (MT) der Objektmodus ist, wobei das ausgewählte eine oder die ausgewählten mehreren Objekte mindestens teilweise die eine oder mehreren Grenzen der Modifikationsgeste schneiden;
ii. Auswählen eines oder mehrerer Pixel des digitalen Inhalts, wenn der ausgewählte Modustyp (MT) der Pixelmodus ist, wobei das ausgewählte eine oder die ausgewählten mehreren Pixel innerhalb der einen oder mehreren Grenzen der Modifikationsgeste enthalten sind;
f. Modifizieren mindestens des ausgewählten digitalen Inhalts, wobei das Modifizieren Folgendes umfasst:
i. Modifizieren mindestens des ausgewählten einen oder der ausgewählten mehreren Objekte des digitalen Inhalts, wenn der Modustyp der Objektmodus ist.
ii. Modifizieren mindestens des ausgewählten einen oder der ausgewählten mehreren Pixel des digitalen Inhalts, wenn der Modustyp der Pixelmodus ist.
**dadurch gekennzeichnet, dass**:
bei dem Auswählen von c. der ausgewählte Modustyp erkannt wird, indem mindestens ein Merkmal der Modifikationsgeste bewertet wird,
wobei das mindestens eine Merkmal der Modifikationsgeste eines von Geschwindigkeit, Richtung und Druck der Modifikationsgeste umfasst.

11. Verfahren nach Anspruch 10, wobei:
a. der angezeigte digitale Inhalt handschriftliche Eingaben und Schriftsatz-Eingaben umfasst;
b. die identifizierte handschriftliche Eingabe und die Schriftsatz-Eingabe als mindestens ein erstes Objekt bzw. mindestens ein zweites Objekt interpretiert werden;
c. mindestens eine Grenze der erkannten Modifikationsgeste mindestens einen Teil des ersten Objekts und mindestens einen Teil des zweiten Objekts schneidet;
d. der ausgewählte digitale Inhalt Folgendes umfasst:
i. das erste Objekt und das zweite Objekt, wenn der ausgewählte Modustyp der Objektmodus ist; und
ii. mindestens ein Pixel der handschriftlichen Eingabe und mindestens ein Pixel der Schriftsatz-Eingabe, wenn der ausgewählte Modustyp der Pixelmodus ist, wobei das ausgewählte mindestens eine Pixel innerhalb der einen oder mehreren Grenzen der Modifikationsgeste enthalten ist.

12. Verfahren nach Anspruch 11, wobei:
das mindestens erste Objekt und das mindestens zweite Objekt von dem Objektmodifikationsmodul (MM1) formatiert oder bearbeitet, einschließlich markiert oder gelöscht werden;
das mindestens eine Pixel der handschriftlichen Eingabe und mindestens ein Pixel der Schriftsatz-Eingabe durch das Pixelmodifikationsmodul (MM2) modifiziert, einschließlich eingefärbt oder auf eine Hintergrundfarbe festgelegt werden.

## Revendications

1. Dispositif informatique (100) destiné à effectuer une modification sur le contenu numérique d'un document, comprenant :
a. une interface d'affichage (102) configurée pour afficher le contenu numérique sous forme d'entrée manuscrite ou d'entrée dactylographiée ;
b. un module d'identification (MD2) configuré pour interpréter le contenu numérique comme un ou plusieurs objets ;
c. un module de sélection de type de mode (MD6) configuré pour sélectionner un type de mode, ledit type de mode étant un mode pixel ou un mode objet ;
d. une surface d'entrée (104) configurée pour détecter un geste de modification dans lequel une ou plusieurs limites du geste de modification intersectent au moins une partie du contenu numérique ;
e. un module de sélection (MD8) configuré pour sélectionner, au moins partiellement, le contenu numérique en fonction du type de mode sélectionné, le module de sélection (MD8) comprenant :
i. un module de sélection d'objet (SM1), configuré pour sélectionner un ou plusieurs objets du contenu numérique lorsque le type de mode sélectionné est le mode objet, dans lequel le ou les objets sélectionnés intersectent, au moins partiellement, une ou plusieurs limites du geste de modification détecté ; et
ii. un module de sélection de pixels (SM2) configuré pour sélectionner un ou plusieurs pixels du contenu numérique lorsque le type de mode sélectionné est le mode pixel, dans lequel le ou les pixels sélectionnés sont contenus dans une ou plusieurs limites du geste de modification détecté ; et
f. un module de modification (MD10) configuré pour modifier le contenu numérique sélectionné ;
**caractérisé en ce que** :
le module de sélection de type de mode est configuré pour détecter le type de mode sélectionné en évaluant au moins une caractéristique du geste de modification,
dans lequel ladite au moins une caractéristique du geste de modification comprend l'une parmi la vitesse, la direction et la pression du geste de modification.

2. Dispositif informatique selon la revendication 1, comprenant : un module de sélection de type de modification (MD4) configuré pour sélectionner un type de modification, dans lequel le module de modification (MD10) est configuré pour modifier le contenu numérique sélectionné en fonction du type de modification sélectionné.

3. Dispositif informatique selon la revendication 1 ou 2, dans lequel le ou les objets de l'encre numérique comprennent des caractères, des mots, des paragraphes ou des formes.

4. Dispositif informatique selon l'une quelconque des revendications 1 à 3, dans lequel le contenu numérique est interprété comme une pluralité de segments et dans lequel le module de sélection de pixels est configuré pour sélectionner un ou plusieurs segments du contenu numérique qui se croisent à l'intérieur d'une ou plusieurs limites du geste de modification détecté, ledit module de modification de pixels étant configuré pour modifier le ou les segments sélectionnés.

5. Dispositif informatique selon l'une quelconque des revendications 1 à 4, dans lequel le module de modification d'objet (MM1) est configuré pour formater le ou les objets sélectionnés et le module de modification de pixel (MM2) est configuré pour modifier le rendu du ou des pixels sélectionnés lorsque le type de mode sélectionné est respectivement le mode objet et le mode pixel.

6. Dispositif informatique selon l'une quelconque des revendications 1 à 5, dans lequel le module de modification d'objet (MM1) est configuré pour effacer le ou les objets sélectionnés et le module de modification de pixel (MM2) est configuré pour effacer le ou les pixels sélectionnés, lorsque le type de mode sélectionné est respectivement le mode objet et le mode pixel.

7. Dispositif informatique selon l'une quelconque des revendications 1 à 6, dans lequel le module de sélection de type de mode est configuré pour sélectionner le type de mode par interaction avec un outil comprenant au moins l'un parmi un clavier, des boutons d'interface utilisateur ou un menu.

8. Dispositif informatique selon la revendication 7, dans lequel ladite au moins une caractéristique du geste de sélection comprend une première caractéristique définie comme une vitesse du geste de sélection.

9. Dispositif informatique selon la revendication 8, dans lequel ladite au moins une caractéristique du geste de sélection comprend une deuxième caractéristique définie comme une direction du geste de sélection.

10. Procédé pour effectuer une modification sur le contenu numérique d'un document en mode pixel ou en mode objet, comprenant :
a. l'affichage du contenu numérique sous forme d'entrée manuscrite ou d'entrée dactylographiée ;
b. interprétation du contenu numérique comme un ou plusieurs objets ;
c. sélection d'un type de mode, dans lequel ledit type de mode est le mode pixel ou le mode objet ;
d. détection d'une ou plusieurs limites d'un geste de modification intersectant au moins une partie du contenu numérique ;
e. sélection, au moins partiellement, du contenu numérique, ladite sélection comprenant :
i. sélection d'un ou plusieurs objets du contenu numérique lorsque le type de mode sélectionné (MT) est le mode objet, dans lequel le ou les objets sélectionnés intersectent, au moins partiellement, la ou les limites du geste de modification ;
ii. sélection d'un ou plusieurs pixels du contenu numérique lorsque le type de mode sélectionné (MT) est le mode pixel, lesdits un ou plusieurs pixels sélectionnés étant contenus dans lesdites une ou plusieurs limites du geste de modification ;
f. modification d'au moins le contenu numérique sélectionné, ladite modification comprenant :
i. modification d'au moins un ou plusieurs objets sélectionnés du contenu numérique lorsque le type de mode est le mode objet.
ii. modification d'au moins un ou plusieurs pixels sélectionnés du contenu numérique lorsque le type de mode est le mode pixel.
**caractérisé en ce que** :
dans ladite sélection c., le type de mode sélectionné est détecté en évaluant au moins une caractéristique du geste de modification,
ladite au moins une caractéristique du geste de modification comprenant l'une parmi la vitesse, la direction et la pression du geste de modification.

11. Procédé selon la revendication 10, dans lequel :
a. le contenu numérique affiché comprend une entrée manuscrite et une entrée dactylographiée ;
b. les entrées manuscrites et les entrées dactylographiées identifiées sont interprétées respectivement comme au moins un premier objet et au moins un deuxième objet ;
c. au moins une limite du geste de modification détecté intersecte au moins une partie du premier objet et au moins une partie du deuxième objet ;
d. le contenu numérique sélectionné comprend :
i. le premier objet et le deuxième objet lorsque le type de mode sélectionné est le mode objet ; et
ii. au moins un pixel de l'entrée manuscrite et au moins un pixel de l'entrée dactylographiée lorsque le type de mode sélectionné est le mode pixel, dans lequel le ou les pixels sélectionnés sont contenus dans une ou plusieurs limites du geste de modification.

12. Procédé selon la revendication 11, dans lequel :
le au moins un premier objet et le au moins un deuxième objet sont formatés ou modifiés, y compris mis en surbrillance ou effacés, par le module de modification d'objet (MM1) ;
le au moins un pixel de l'entrée manuscrite et le au moins un pixel de l'entrée dactylographiée sont modifiés, y compris colorés ou définis avec une couleur d'arrière-plan, par le module de modification de pixels (MM2).
